(19) **Europäisches Patentamt / European Patent Office / Office européen des brevets**

(11) **EP 1 933 277 B1**

(12) **EUROPEAN PATENT SPECIFICATION**

(45) Date of publication and mention
of the grant of the patent:
**17.11.2010 Bulletin 2010/46**

(21) Application number: **06796414.8**

(22) Date of filing: **14.08.2006**

(51) Int Cl.:
**G06T 7/00** (2006.01)    **G01C 21/00** (2006.01)
**G06K 9/00** (2006.01)

(86) International application number:
**PCT/JP2006/316024**

(87) International publication number:
**WO 2007/029455 (15.03.2007 Gazette 2007/11)**

(54) **SCENE MONOTONOUSNESS CALCULATION DEVICE AND METHOD**

ANORDNUNG UND VERFAHREN ZUR BERECHNUNG DER MONOTONIE EINER SZENE

DISPOSITIF ET PROCÉDÉ DE CALCUL DE LA MONOTONIE D'UNE SCÈNE

(84) Designated Contracting States:
**DE FR GB**

(30) Priority: **07.09.2005 JP 2005259133**

(43) Date of publication of application:
**18.06.2008 Bulletin 2008/25**

(73) Proprietor: **Pioneer Corporation**
**Tokyo 153-8654 (JP)**

(72) Inventor: **FUJITA, Ryujiro**
**Tsurugashima-shi**
**Saitama 350-2288 (JP)**

(74) Representative: **Viering, Jentschura & Partner**
**Postfach 22 14 43**
**80504 München (DE)**

(56) References cited:
**WO-A-01/91123       JP-A- 2004 048 761**
**JP-A- 2004 056 763    JP-A- 2005 006 966**
**JP-A- 2005 063 307    JP-A- 2005 078 233**
**US-A1- 2003 023 742**

- **FLETCHER L ET AL: "Road scene monotony.detection in a fatigue management driver assistance system" INTELLIGENT VEHICLES SYMPOSIUM, 2005. PROCEEDINGS. IEEE LAS VEGAS, NV, USA JUNE 6-8, 2005, PISCATAWAY, NJ, USA,IEEE, PISCATAWAY, NJ, USA, 6 June 2005 (2005-06-06), pages 484-489, XP010833842 ISBN: 978-0-7803-8961-8**

- **BURSCHKA D ET AL: "Vision-Based 3D Scene Analysis for Driver Assistance" ROBOTICS AND AUTOMATION, 2005. PROCEEDINGS OF THE 2005 IEEE INTERNATIONAL CONFERENCE ON BARCELONA, SPAIN 18-22 APRIL 2005, PISCATAWAY, NJ, USA,IEEE, 18 April 2005 (2005-04-18), pages 812-818, XP010872241 ISBN: 978-0-7803-8914-4**
- **LUO R C ET AL: "Outdoor landmark recognition using fractal based vision and neural networks" INTELLIGENT ROBOTS AND SYSTEMS '93, IROS '93. PROCEEDINGS OF THE 1993 IEIEE/RSJ INTERNATIONAL CONFERENCE ON YOKOHAMA, JAPAN 26-30 JULY 1993, NEW YORK, NY, USA,IEEE, US, vol. 1, 26 July 1993 (1993-07-26), pages 612-618, XP010219125 ISBN: 978-0-7803-0823-7**
- **SHE A C ET AL: "Segmentation of road scenes using color and fractal-based texture classification" PROCEEDINGS OF THE INTERNATIONAL CONFERENCE ON IMAGE PROCESSING (ICIP) AUSTIN, NOV. 13 - 16, 1994; [PROCEEDINGS OF THE INTERNATIONAL CONFERENCE ON IMAGE PROCESSING (ICIP)], LOS ALAMITOS, IEEE COMP. SOC. PRESS, US, vol. 3, 13 November 1994 (1994-11-13), pages 1026-1030, XP010146477 ISBN: 978-0-8186-6952-1**
- **OLIVA A ET AL: "Modeling the shape of the scene: A holistic representation of the spatial envelope" INTERNATIONAL JOURNAL OF COMPUTER VISION KLUWER ACADEMIC PUBLISHERS NETHERLANDS, vol. 42, no. 3, 2001, pages 145-175, XP002431009 ISSN: 0920-5691**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to an apparatus for and a method of calculating or operating the degree of monotony in scenery in the travel route of an automobile by analyzing scenic images shot with a camera or the like provided for the automobile, and a computer program, a server, a recording medium, and a navigation apparatus which realize such functions.

Background Art

In order to prevent a driver from getting sleepy while driving an automobile in a monotonous route or a fellow passenger from getting bored, various technologies have been suggested which alert the driver during the drive in the monotonous route. For example, Japanese Patent Application Laid Open NO. 2002-254955 discloses such a technology that a long-time travel or long-distance travel is detected as a monotonous drive and that a message to alert the driver is outputted in order to make the driver stay awake.

The paper of Fletcher L. et al. entitled "Road Scene Monotony Detection in a Fatigue Management Driver Assistance System" in IEEE Proc. Intelligent Vehicles Symposium 2005, pages 484-489, discloses a road scene monotony detector usable to give context awareness to fatigue detection tools to minimize false positives. That detector uses MPEG compression to measure the change in information content of the road scene over time, and correlates highly with human identified monotonous scenes.

[0003a]
The paper of Oliva A. et al. entitled "Modeling the Shape of the Scene: A Holistic Representation of the Spatial Envelope" in Int. J. Computer Vision, Kluwer Academic Publ. NL, vol. 42, no. 3, 2001, pages 145-175, discloses a computational model of the recognition of real world scenes based on a very low dimensional representation of the scenes.

Disclosure of Invention

Subject to be Solved by the Invention

However, even in the long-time travel or long-distance travel, for example, if a route passes through scenery full of variety, it cannot be said that the degree of monotony in the travel route is high. That is, the long-time travel or long-distance travel is highly related to the fatigue degree of the driver or the fellow passenger, but is less related to the degree of monotony in the travel route. Thus, there is such a technical problem that the degree of monotony cannot be calculated highly accurately.

In view of the aforementioned problem, it is therefore an object of the present invention to provide an apparatus for and a method of calculating or operating the degree of monotony in scenery in the travel route, and a computer program, a server, a recording medium, and a navigation apparatus which realizes such functions.

Means for Solving the Object

The present invention is set out in the independent claims. Preferred embodiments of the present invention are featured in the dependent claims.

(Apparatus for Calculating Degree of Monotony in Scenery)

The above object of the present invention can be achieved by a first apparatus for calculating a degree of monotony in scenery provided with: an image obtaining device for obtaining appearance images; and a degree-of-monotony arithmetic device for calculating the degree of monotony in scenes corresponding to the appearance images, on the basis of the appearance images obtained by the image obtaining device.

According to the first apparatus for calculating a degree of monotony in scenery in the present invention, for example, by the image obtaining device which is mounted on a movable body and which includes a camera or the like directed in a travel direction when the movable body moves, the appearance image is obtained by shooting a scene, such as a landscape, an object, and an objective aggregate. The "appearance image" in the present invention means an image indicating the appearance of an object or an objective aggregate or the scene, and it includes the appearance of an artifact, such as a building and a vehicle, or a natural scene, such as the ocean and mountains. As the image obtaining device, it may be a device for accessing an external server through a communication line and obtaining the appearance images accumulated or generated in advance, in addition to the shooting with the camera or the like.

Next, the degree of monotony in scenes corresponding to the appearance images is calculated on the basis of the obtained appearance images, by the degree-of-monotony arithmetic device.

Here, the "degree of monotony" in the present invention means the extent of monotony with respect to time or position. The expression that "the degree of monotony is calculated on the basis of the obtained appearance images" means, more specifically, that the degree of monotony is calculated in accordance with how small a temporal change or positional change in the appearance images is. The smaller the temporal change or positional change is, the higher the degree of monotony is. In contrast, the larger the temporal change or positional change is, the lower the degree of monotony is.

Moreover, "to calculate" in the present invention includes to calculate the degree of monotony in accordance with a function with the temporal change or positional change as a parameter set in advance and to calculate the degree of monotony in accordance with a table which indicates a relationship between the temporal change or positional change and the degree of monotony set in advance. For example, the degree of monotony is calculated on the basis of results classified in "forest", "town", "forest" and "open road" If the characteristic of the scenes corresponding to the appearance images is changed in time series in the order of "forest", "town", and "forest" and "open road", the lower degree of monotony is calculated than that when the characteristic corresponding to the appearance images is changed in time series in the order of "forest", "town", "forest" and "forest".

For example, by providing a certain threshold value for the degree of monotony by the degree-of-monotony arithmetic device, it can be judged whether or not the scenes corresponding to the obtained appearance images are monotonous, in other words, whether or not the travel route of the movable body is monotonous. For example, if the degree of monotony is expressed in a range of 0 to 100 and the degree of monotony is greater than or equal to 80, it can be judged that the travel route of the movable body is monotonous. If it is judged that the travel route is monotonous, for example, it is possible to get sleepiness out by outputting a warning and providing a change in circumstances for a driver. Alternatively, it is possible to prevent a fellow passenger from getting bored with being inside the movable body by changing music, video, or the like in the movable body.

The above object of the present invention can be also achieved by a second apparatus for calculating a degree of monotony in scenery provided with: a scenic image obtaining device for obtaining scenic images in order with respect to time, or obtaining the scenic images in order from one edge of a route; a scenic image classifying device for classifying each of the scenic images obtained in order, in any one of a plurality of scene classes set in advance; and a degree-of-monotony arithmetic device for calculating the degree of monotony in scenes corresponding to the scenic images obtained in order, on the basis of a temporal change or positional change in the classified scene class.

According to the second apparatus for calculating a degree of monotony in scenery in the present invention, for example, by the image obtaining device which is mounted on a movable body and which includes a camera or the like directed in a travel direction when the movable body moves, the scenic image is obtained by shooting a scene, such as a landscape, an object, and an objective aggregate. The scenic images are obtained in order with respect to time, or in order from one end of the route. Here, the expression "in order with respect to time" in the present invention means regularly or irregularly, or intermittently at constant or fixed time intervals, in other words, in time series. Moreover, the expression "in order from one end of the route" in the present invention means intermittently at constant or fixed distance intervals. That is, the scenic image is obtained in each predetermined travel time (e.g. 5 seconds) or in each predetermined travel distance (e.g. 50m) of the movable body. The obtained scenic images are stored into an external or built-in memory medium, such as a hard disk.

Each of the obtained scenic images is classified into any of the plurality of scene classes set in advance. Here the "plurality of scene classes set in advance" in the present invention is an item set in advance by the setting at a factory or a user's operation or the like. As the "plurality of scene classes set in advance", for example, three classes of "forest", "town", and "open road" are set. At this time, in order to classify the scenic image which is not classified in these scene classes, "others" may be further set as the "plurality of scene classes set in advance". The classification result by the scenic image classifying device is stored into an external or built-in memory medium, such as a hard disk.

Next, the degree of monotony in the obtained scenic images is calculated on the basis of the temporal change or the positional change in the classified scenic classes, by the degree-of-monotony arithmetic device. The expression that "the degree of monotony is calculated on the basis of the temporal change or positional change" in the present invention means, more specifically, that the degree of monotony is calculated in accordance with how small the temporal change or positional change is. The smaller the temporal change or positional change is, the higher the degree of monotony is. In contrast, the larger the temporal change or positional change is, the lower the degree of monotony is. For example, if the scene class is changed in time series in the order of "forest", "town", and "forest" and "open road", the lower degree of monotony is calculated than that when the scene class s is changed in time series in the order of "forest", "town", "forest" and "forest".

For example, by providing a certain threshold value for the degree of monotony by the degree-of-monotony arithmetic device, it can be judged whether or not the scenes corresponding to the scenic images obtained in order are monotonous, in other words, whether or not the travel route of the movable body is monotonous. For example, if the degree of monotony is expressed in a range of 0 to 100 and the degree of monotony is greater than or equal to 80, it can be judged that the travel route of the movable body is monotonous. If it is judged that the travel route is monotonous, for example, it is possible to get sleepiness out by outputting a warning and providing a change in circumstances for a driver. Alternatively, it is possible to prevent a fellow passenger from getting bored with being inside the movable body by changing music, video, or the like in the movable body.

In one aspect of the second apparatus of the present invention, the degree-of-monotony arithmetic device counts the number of times of changing the classified scene class, with regard to a predetermined number of scenic images obtained in a predetermined period or obtained in tandem, counts the number of types of the classified scene classes, with regard to the predetermined number of scenic images, and calculates the degree of monotony, on the basis of the counted number of times and the counted number of types.

According to this aspect, firstly, by the degree-of-monotony arithmetic device, the number of times of changing the classified scene class is counted with regard to the predetermined number of scenic images obtained in the predetermined period or obtained in tandem. Here the "number of times of changing the scene class" in the present invention means, for example, the number of times of changing from "forest" to a different scene class, such as "own". For example, if the scene class is changed in time series in the order of "forest", "town", and "forest" and "open road", the "number of times of changing the scene class" is "3". The counted number is stored into a memory medium, such as a memory.

At the same time or in tandem with counting the number of times of changing the scene class, the number of types of the classified scene classes (in other words, the total number of mutually different scene classes which appear as the classification result) is counted for the predetermined number of scenic images by the degree-of-monotony arithmetic device. For example, if the scene class is changed in time series in the order of "forest", "town", and "forest", the number of types of the scenic classes is counted as two of "forest" and "town". That is, the "number of types of the scene classes" is "2". The counted number of types is stored into a memory medium, such as a memory.

After the counting of the number of times of changing the scene class and the counting of the number of types of the scene classes, the degree of monotony is calculated on the basis of the counted number of times and the counted number of types, by the degree-of-monotony arithmetic device. For example, the calculation is performed to reduce the degree of monotony as the product of the number of changes multiplied by the number of types increases, and to increase the degree of monotony as the product of the number of changes multiplied by the number of types reduces. That is, an arithmetic equation for the degree of monotony by the degree-of-monotony arithmetic device is as follows.

$$\text{Degree of monotony}$$
$$= 1 - (\text{the counted number of times} \times \text{the counted number of types}) /$$
$$(\text{the total number of scenic images} \times \text{the total number of types}) \ldots (1)$$

In the equation (1), the "total number of scenic images" means the number of the scenic images which are targets for calculating the degree of monotony. Moreover, the "total number of types" means the number of the plurality of scene classes set in advance. For example, if the plurality of scene classes set in advance are "forest", "town", "open road", and "others", the total number of types is four. Incidentally, "others" may be excluded from the total number of types. Moreover, in order to express the degree of monotony in a range of 0 to 100, in the equation (1), the counted number of times may be replaced by "the counted number of times -1", and the right side may be multiplied by 100.

According to the present invention, because the degree of monotony is calculated in the above manner by the degree-of-monotony arithmetic device, it is possible to calculate the degree of monotony which reflects the monotony of the scenes corresponding to the scenic images. Thus, for example, by providing a certain threshold value for the degree of monotony, it can be judged whether or not the scenes corresponding to the scenic images are monotonous, in other words, whether or not the travel route of the movable body is monotonous.

In another aspect of the second apparatus of the present invention, the scenic image classifying device groups each predetermined number of the scenic images obtained in order as one scenic image group, and classifies the scenic image group in any one of the plurality of scene classes set in advance on the basis of the classified scene classes of the scenic images included in the scenic image group, and the degree-of-monotony arithmetic device counts the number of times of changing the scene class in which the scenic image group is classified, with regard to a predetermined number of scenic images obtained in a predetermined period or obtained in tandem, counts the number of types of the classified scene classes in which the scenic image groups are classified, with regard to the predetermined number of scenic images, and calculates the degree of monotony, on the basis of the counted number of times and the counted number of types.

According to this aspect, each predetermined number, e.g. five, of the scenic images obtained in order is grouped as one scenic image group by the scenic image classifying device. Moreover, the scenic image group is classified in the scenic class set in advance, on the basis of the scene classes in which five scenic images included in one scenic image group are classified. For example, if four of the five scenic images included in one scenic image group are classified in "forest" and one scenic image is classified in "town" by the scenic image classifying device, the scene class of the scenic image group is classified in "forest" by the scenic image classifying device.

Then, the number of times of changing the scene class n which the scenic image group is classified is counted for the predetermined number of scenic images obtained in the predetermined period or obtained in tandem by the scenic image classifying device. Moreover, the number of types of the scene classes in which the scenic image groups are classified is counted for the predetermined number of scenic images. Then, the degree of monotony is calculated on the basis of the counted number of times and the counted number of types.

According to the present invention, each predetermined number of the obtained scenic images are classified as one scenic image group. Thus, a local change in the scene class, which can be caused by the existence of a time passing through a crossroad in a forest, can be removed as a noise. That is, it is possible to remove a change which is actually hardly sensed as a change in scenery, for a driver or a fellow passenger, from a series of scenes. Thus, it is possible to calculate the degree of monotony with a higher accuracy.

In another aspect of the second apparatus of the present invention, the scenic image obtaining device includes a shooting device for shooting a scene corresponding to the scenic image.

According to this aspect, the scene, such as an object, an objective aggregate, and a landscape, is shot by the shooting device, such as an on-vehicle camera. Thus, it is possible to obtain the scenic image, certainly.

Incidentally, as the shooting device, it may be a camera for taking a picture, or a camera for shooting video (motion picture), i.e. a video camera.

In another aspect of the second apparatus of the present invention, the scenic image obtaining device is provided with an obstacle recognizing device for recognizing that the scene is blocked by an obstacle existing between the shooting device and any of an object, an objective aggregate, and a landscape, which correspond to the scenic image of the scene.

According to this aspect, it is recognized by the obstacle recognizing device that there is an obstacle approaching the shooting device, such as a camera and an on-vehicle camera, and that the scene corresponding to the scenic image (i.e. an object, an objective aggregate, or a landscape) is blocked by the obstacle (i.e. of the scene, a scene not corresponding to the scenic image) existing between the shooting device and any of the object, the objective aggregate, and the landscape, which correspond to the scenic image of the scene. Specifically, the color or the like of the shot image is investigated, the obstacle included in the image is specified, and a percentage of the obstacle in the image is investigated. Then, when the percentage of the obstacle in the image exceeds a predetermined percentage, it is recognized that there is an obstacle approaching the shooting device, such as a camera and an on-vehicle camera, and that the scene is blocked by the obstacle between the shooting device and any of the object, the objective aggregate, and the landscape, which correspond to the scenic image of the scene. Therefore, it can be judged by the obstacle recognizing device whether or not the scene which is a shooting target is appropriately shot by the shooting device, such as a camera and an on-vehicle camera; namely, whether or not the scene corresponding to the scenic image is appropriately included in the shot images. If it is recognized that the scene is blocked by the obstacle, as described above, for example, it is possible to remove a local change in the scene class, which can be caused by the existence of the obstacle, as a noise. Thus, it is possible to calculate the degree of monotony with a higher accuracy.

In another aspect of the second apparatus of the present invention, the scenic image classifying device includes: an image piece classifying device for classifying each of a plurality of image pieces obtained by dividing each of the scenic images obtained in order, in any one of the plurality of scene classes; and a characteristic judging device for judging a characteristic of a scene included in the scenic image, on the basis of an image piece classification result by the image piece classifying device, and the scenic image classifying device classifies each of the scenic images obtained in order, in accordance with the judged characteristic.

According to this aspect, firstly, each of the obtained scenic images is divided into the plurality of image pieces by the image piece classifying device, and image piece data corresponding to each of the plurality of image pieces is stored into a memory medium, such as a hard disk. For example, if the size of the scenic image is 1280 × 1024 pixels, the size of the image piece is desirably about 30 × 30 pixels. Incidentally, the size of the image piece is desirably determined in view of the accuracy and processing speed of the characteristic judgment device or the like. Moreover, depending on the relationship between the size of the image piece and the size of the scenic image, the entire scene image cannot be divided into uniform image pieces in some cases. In this case, the edge portion of the scenic image may be excluded from a target of the image division device.

Then, each of the plurality of image pieces is classified in any of the plurality of scene classes by the image piece classifying device. The image piece classification result is stored into a memory medium, such as a hard disk.

Then, a characteristic judgment process of judging the characteristic of the scene included in the scenic image is performed on the basis of the image piece classification result, by the characteristic judging device. The characteristic of the scene includes, for example, a nature level, an urban level, and the like. The characteristic judgment process uses a characteristic judgment equation. The characteristic judgment equation is prepared in advance on the basis of experiments or the like before product shipment, and it is stored in a memory device, such as a hard disk. Incidentally, it may be also constructed such that the characteristic judgment equation can be changed.

The characteristic judgment equation is an equation for judging the characteristic of the scene included in the scenic image. The characteristic judgment equation exists in each type of the characteristic of the scene included in the scenic image, for example, in each of the natural level, the urban level, and the like.

As the characteristic judgment equation, there are various equations depending on the type of the characteristic of the scene included in the scenic image, such as a nature level judgment equation and an urban level judgment equation. Each of these equations, however, has the common structure. That is, there is a basic equation for the characteristic judgment equation, and what embodies the basic equation is the nature level judgment equation or the urban level judgment equation. The basic equation of the characteristic judgment equation is as follows.

$$\text{Characteristic of the scene} = (\text{the number of plus elements} - \text{the number of minus elements}) / \text{the total number of judgment elements}...(2)$$

In the equation (2), the number of plus elements is the number of image pieces with the image piece classification result that acts to emphasis the characteristic of the scene which is a characteristic judgment target. The number of minus elements is the number of image pieces with the image piece classification result that acts to weaken the characteristic of the scene which is a characteristic judgment target. The total number of judgment elements is the total number of image pieces with the image piece classification result that is used for the characteristic judgment.

The scenic image classifying device classifies the scenic image in the scene class set in advance, in accordance with the characteristic judged by the characteristic judging device in this manner. For example, the scenic image is classified in accordance with a value of the "characteristic of the scene".

As described above, according to this aspect, the scenic image is classified in the scene class set in advance, in accordance with the characteristic judged on the basis of the classification result in each of the divided image pieces is classified. Thus, it is possible to classify the scenic image highly accurately.

In an aspect including the aforementioned image piece classifying device, the image piece classifying device may include: a color analyzing device for analyzing a color property in each of the plurality of image pieces; a fractal dimension analyzing device for performing a fractal dimension analysis in each of the plurality of image pieces; and an artifact amount recognizing device for recognizing an amount of an artifact or artificial portion included in each of the plurality of image pieces, and the image piece classifying device may specify a type of one portion of the scene included in each of the plurality of image pieces on the basis of a color analysis result by the color analyzing device, a fractal dimension analysis result by the fractal dimension analyzing device, and a recognition result of the amount of the artifact or artificial portion by the artifact amount recognizing device, and performs the classification on the basis of the specified type.

In this case, the image piece classifying device includes the color analyzing device, the fractal dimension analyzing device, and the artifact amount recognizing device. Each of the plurality of image pieces (i.e. each image piece) is classified as follows.

Firstly, the color analyzing device analyzes the color property in each pixel in each image piece.

Firstly, if color information about the image piece data is RGB-system color information, the color analyzing device converts this color information to color-system color information using hue, lightness, and saturation as parameters, e.g. HLS-system color information. Then, the color analyzing device selects one pixel on which the color analysis process has not been performed, from among the pixels included in the image piece.

Then, the fractal dimension analyzing device performs the fractal dimension analysis on the same image piece. The fractal dimension analysis process provides a fractal dimension value for the image piece. The fractal dimension value is any value of 0.0 to 2.0, for example. The fractal dimension value is stored into a memory medium, such as a hard disk Incidentally, the fractal dimension analysis can use a known fractal dimension analyzing method.

Then, the artifact amount recognizing device recognizes the amount of the artifact or artificial portion included in each image piece.

The artifact amount recognizing device firstly extracts edge components which extend in a longitudinal direction in the image piece, i.e. vertical edge components. For example, the lower side of the image piece matches the horizon in the shot scene, the vertical edge component is an edge component which extends in a direction of perpendicularly crossing the lower side of the image piece. Then, the artifact amount recognizing device binarizes the extracted vertical edge components. Then, the artifact amount recognizing device counts the number of the vertical edge components with a predetermined length or more which continuously extend. For example, the artifact amount recognizing device counts the number of the vertical edge components that continuously extend from the lower edge to the upper edge of the image piece. In general, although the artifact, such as a sign and a building, extends straight in a vertical direction from a horizontal ground, a natural object, such as a plant, does not, in many cases. Thus, by counting the vertical edge components with the predetermined length or more which continuously extend in one image piece, it is possible to know the amount of the artifacts included in one image piece. A value that indicates the number of the vertical edge components with the predetermined length or more which continuously extend in one image piece is stored into a memory medium, such as a hard disk, as an artifact amount count value.

Then, the image piece classifying device specifies the type of one portion of the scene included in each image piece, on the basis of the color analysis result by the color analyzing device, the fractal dimension analysis result by the fractal dimension analyzing device, and the recognition result of the amount of artifacts or an artificial portion by the artifact amount recognizing device, and it classifies each image piece on the basis of the type. As image piece classification items in which the image pieces are classified, "plant", "sky", "artifact", and "others", are set. The classification result by the image piece classifying device is stored in a memory medium, such as a hard disk. If the image piece is not applicable to any of the classification items, the image piece is classified in a classification item of "others".

Then, the characteristic judging device judges the characteristic of the scene included in the scenic image on the basis of the image piece classification result by the image piece classifying device. As an index indicating the characteristic of the scene, for example, a nature level, an urban level and the like are used.

The nature level judgment equation for judging the nature level is as follows.

$$\text{Nature level} = (\text{the number of plants} - \text{the number of artifacts}) \text{ / the total number of judgment elements} \ldots (3)$$

$$\text{wherein the total number of judgment elements} = \text{the number of plants} + \text{the number of sky} + \text{the number of artifacts} \ldots (4)$$

In the equation (3), the "number of plants" is the number of image pieces with a classification result of "plant", and the "number of artifacts" is the number of image pieces with a classification result of "artifact". Moreover, the classification results used for the judgment of the nature level are "plant", "sky", and "artifact". The "total number of judgment elements" is a sum of the number of plants, the number of image pieces with a classification result of "sky" (the number of sky), and the number of artifacts.

The value of the nature level is any value of -1 to 1. If the nature level is the lowest, it is -1. If the nature level is the highest, it is +1.

Moreover, the urban level judgment equation for judging the nature level is as follows.

$$\text{Urban level} = \{\text{the number of artifacts} - (\text{the number of plants} + \text{the number of sky}) \text{ / the total number of judgment elements} \ldots (5)$$

$$\text{wherein the total number of judgment elements} = \text{the number of plants} + \text{the number of sky} + \text{the number of artifacts} \ldots (6)$$

In the equation (5), the classification results used for the judgment of the urban level are "plant", "sky", and "artifact".

The "total number of judgment elements" is a sum of the number of plants, the number of sky, and the number of artifacts.

The value of the urban level is any value of -1 to 1. If the urban level is the lowest, it is -1. If the urban level is the highest, it is +1.

Moreover, an open road level may be judged. The open road level indicates the extent that the scene around the road is open without tall trees and buildings. The open road level judgment equation is as follows.

$$\text{Open road level} = (\text{the number of sky} - \text{the number of plants}) \, / \, \text{the total number of judgment elements} \dots (7)$$

$$\text{wherein the total number of judgment elements} = \text{the number of plants} + \text{the number of sky} + \text{the number of artifacts} \dots (8)$$

The value of the open road level is any value of -1 to 1. If the open road level is the lowest, it is -1. If the open road level is the highest, it is +1.

Next, in accordance with the characteristic judged by the characteristic judging device, each of the obtained scenic images is divided by the scenic image classifying device. For example, if the scene classes set in advance are "forest", "town", "open road", and "others", for example, the scenic image is classified in "forest" when the nature level is greater than or equal to a predetermined value, in "town" when the urban level is greater than or equal to a predetermined value, and in "open road" when the open road level is greater than or equal to a predetermined value.

As described above, according to this aspect, the scenic image is classified in the scene class set in advance, in accordance with the characteristic judged on the basis of the color analysis result by the color analyzing device, the fractal dimension analysis result by the fractal dimension analyzing device, and the recognition result of the amount of the artifact or artificial portion by the artifact amount recognizing device with regard to each of the divided plurality of image pieces. Thus, it is possible to classify the scenic image highly accurately.

(Method of Calculating Degree of Monotony in Scenery)

The above object of the present invention can be also achieved by an method of calculating a degree of monotony in scenery provided with: a scenic image obtaining process of obtaining scenic images in order with respect to time, or obtaining the scenic images in order from one edge of a route; a scenic image classifying process of classifying each of the scenic images obtained in order, in any one of a plurality of scene classes set in advance; and a degree-of-monotony arithmetic process of calculating the degree of monotony in scenes corresponding to the scenic images obtained in order, on the basis of a temporal change or positional change in the classified scene class.

According to the method of calculating a degree of monotony in scenery of the present invention, it is possible to receive the various benefits owned by the aforementioned second apparatus for calculating a degree of monotony in scenery of the present invention.

Incidentally, in response to various aspects owned by the apparatus for calculating a degree of monotony in scenery of the present invention, the method of calculating a degree of monotony in scenery of the present invention can also employ various aspects.

(Computer Program)

The above object of the present invention can be also achieved by a computer program making a computer function as the aforementioned first or second apparatus for calculating the degree of monotony in scenery of the present invention.

According to the computer program of the present invention, the aforementioned first or second apparatus for calculating a degree of monotony in scenery of the present invention can be embodied relatively readily, by loading the computer program from a recording medium for storing the computer program, such as a ROM, a CD-ROM, a DVD-ROM, a hard disk or the like, into the computer, or by downloading the computer program, which may be a carrier wave, into the computer via a communication device.

The above object of the present invention can be also achieved by a computer program product in a computer-readable medium for tangibly embodying a program of instructions executable by a computer, to make the computer function as the aforementioned first or second apparatus for calculating the degree of monotony in scenery of the present invention (including its various aspects).

According to the first or second computer program product of the present invention, the aforementioned first or second apparatus for calculating the degree of monotony in scenery of the present invention can be embodied relatively readily, by loading the computer program product from a recording medium for storing the computer program product, such as a ROM (Read Only Memory), a CD-ROM (Compact Disc - Read Only Memory), a DVD-ROM (DVD Read Only Memory), a hard disk or the like, into the computer, or by downloading the computer program product, which may be a carrier wave, into the computer via a communication device. More specifically, the computer program product may include computer readable codes to cause the computer (or may comprise computer readable instructions for causing the computer) to function as the aforementioned first or second apparatus for calculating the degree of monotony in scenery of the present invention.

(Server)

The above object of the present invention can be also achieved by a server having map information which reflects the degree of monotony calculated by the aforementioned first or second apparatus for calculating the degree of monotony in scenery of the present invention.

According to the server of the present invention, the map information, which reflects the degree of monotony calculated by the aforementioned first or second apparatus for calculating the degree of monotony in scenery of the present invention, can be used by a plurality of vehicles or users by accessing the server or distributing the map information from the server, which is extremely useful.

(Recording Medium)

The above object of the present invention can be also achieved by a recording medium having map information which reflects the degree of monotony calculated by the aforementioned first or second apparatus for calculating the degree of monotony in scenery of the present invention.

According to the recording medium of the present invention, the map information, which reflects the degree of monotony calculated by the aforementioned first or second apparatus for calculating the degree of monotony in scenery of the present invention, can be used by a plurality of vehicles or users by accessing the recording medium or distributing the recording medium, which is extremely useful.

(Navigation Apparatus)

The above object of the present invention can be also achieved by a navigation apparatus for performing route guidance on the basis of the degree of monotony calculated by the aforementioned first or second apparatus for calculating the degree of monotony in scenery of the present invention.

According to the navigation apparatus of the present invention, the rouge guidance can be performed in accordance with the degree of monotony in the route.

In one aspect of the navigation apparatus of the present invention, the degree of monotony is displayed as color information.

According to this aspect, a driver can visually confirm the degree of monotony by using the color information.

In another aspect of the navigation apparatus of the present invention, it performs the route guidance on the basis of the degree of monotony and a driver's biological information.

According to this aspect, the navigation apparatus performs the route guidance on the basis of the driver's biological information in addition to the degree of monotony, so that it is possible to perform the route guidance suitable for the driver's health condition or the like. The "driver's biological information" of the present invention means information about the driver's body, such as the driver's heart rate, the driver's face expression, skin surface temperature, or fatigue degree and sleepiness based on those.

Incidentally, in respond to various aspects of the aforementioned first or second apparatus for calculating a degree of monotony in scenery of the present invention, the computer program of the present invention can employ various aspects.

These effects and other advantages of the present invention will become more apparent from the embodiments explained below.

As explained above in detail, the first apparatus for calculating a degree of monotony in scenery of the present invention of the present invention is provided with: the image obtaining device; and the degree-of-monotony arithmetic device. Thus, it is possible to calculate the degree of monotony in scenery. The second apparatus for calculating a degree of monotony in scenery of the present invention of the present invention is provided with: the scenic image obtaining device; the scenic image classifying device; and the degree-of-monotony arithmetic device. Thus, it is possible to calculate the degree of monotony in scenery. For example, it is possible to judge that the travel route of the movable body is monotonous. For example, if it is judged the travel route is monotonous, for example, outputting a warning and providing a change in circumstances for the driver can prevent drowsy driving. Alternatively, changing music, video or the like in the movable body can prevent a fellow passenger from getting bored with being inside the movable body. The method of calculating a degree of monotony in scenery of the present invention is provided with: the scenic image obtaining process; the scenic image classifying process; and the degree-of-monotony arithmetic process. Thus, it is possible to receive the various benefits owned by the second apparatus for calculating a degree of monotony in scenery of the present invention. The computer program of the present invention makes a computer function as the first or second apparatus for calculating a degree of monotony in scenery of the present invention. Thus, if the computer program is read by the computer and executed, the first or second apparatus for calculating a degree of monotony in scenery of the present invention can be realized, relatively easily. The server of the present invention has the map information which reflects the degree of monotony. Thus, for example, a plurality of users can use the map information, which is extremely useful. The recording medium of the present invention has the map information which reflects the degree of monotony. Thus, for example,
a plurality of users can use the map information, which is extremely useful. The navigation apparatus of the present invention performs the route guidance on the basis of the degree of monotony. Thus, it is possible to perform the route guidance in accordance with the degree of monotony.

Brief Description of Drawings

[FIG. 1] FIG. 1 is a block diagram showing the structure of an apparatus for calculating the degree of monotony in scenery in a first embodiment.
[FIG. 2] FIG. 2 is a flowchart showing the operations of the apparatus for calculating the degree of monotony in scenery in the first embodiment.
[FIG. 3] FIG. 3 is a flowchart showing the content of a scenic image obtaining process.
[FIG. 4] FIG. 4 is an explanatory view showing a scenic image corresponding to scenic image data.
[FIG. 5] FIG. 5 is a flowchart showing the content of a scenic image classification process.
[FIG. 6] FIG. 6 is an explanatory view showing that the image in FIG. 4 is divided into image pieces.
[FIG. 7] FIG. 7 is a flowchart showing the content of a color analysis process. [FIG. 8] FIG. 8 is a flowchart showing an artifact amount recognition process.
[FIG. 9] FIG. 9 is an explanatory view showing that vertical edge components are extracted from the image piece by the artifact amount recognition process.
[FIG. 10] FIG. 10 is an explanatory view showing classification conditions used in an image piece classification process.
[FIG. 11] FIG. 11 is an explanatory view showing a result of the image piece classification by the image piece classification process.
[FIG. 12] FIG. 12 is an explanatory view showing a relationship between the scenic images and scenic image groups.
[FIG. 13] FIG. 13 is a graph showing a change in scene classes in the scenic image groups.
[FIG. 14] FIG. 14 is a table showing the number of changes, the number of types, and the degree of monotony, in each course in FIG. 13.

Description of Reference Codes

1      degree-of-monotony-in-scenery arithmetic apparatus
11     camera
12     input device
13     obstacle recognition device
14     scenic image classification device
15     degree-of-monotony arithmetic device
16     memory apparatus
141    image division device
142    color analysis device
143    fractal dimension analysis device

144     artifact amount recognition device
145     image piece classification device
146     characteristic judgment device
147     image classification device
151     number-of-changes count device
152     number-of-types count device
153     arithmetic device

Best Mode for Carrying Out the Invention

Hereinafter, the best mode for carrying out the present invention will be explained in each embodiment in order with reference to the drawings.

<First Embodiment>

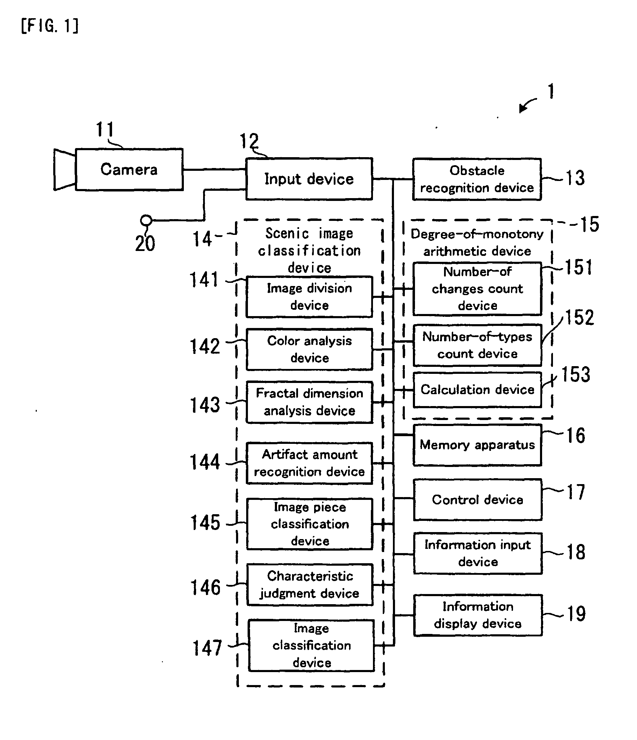

With reference to FIG. 1 to FIG. 14, an apparatus for calculating the degree of monotony in scenery in a first embodiment of the present invention will be explained.

(Structure of Apparatus for Calculating Degree of Monotony in Scenery)

Firstly, with reference to FIG. 1, an explanation will be given on the structure of the apparatus for calculating the degree of monotony in scenery in the first embodiment. FIG. 1 is a block diagram showing the structure of the apparatus for calculating the degree of monotony in scenery in the first embodiment.

In FIG. 1, an apparatus 1 for calculating the degree of monotony in scenery (or a degree-of-monotony-in-scenery arithmetic apparatus 1) is provided with: a camera 11; an input device 12; an obstacle recognition device 13; a scenic image classification device 14; a degree-of-monotony arithmetic device 15; a memory apparatus 16; a control device 17; an information input device 18; and an information display device 19. Here the camera 11 is one example of the "shooting device" of the present invention. The input device 12 is one example of a part of the "scenic image obtaining device" of the present invention. The input device 12 constitutes a part of the "scenic image obtaining device", with the camera 11.

The degree-of-monotony-in-scenery arithmetic apparatus 1 is desirably mounted on a movable body. For example, the degree-of-monotony-in-scenery arithmetic apparatus 1 may be built in a car navigation apparatus and may be mounted on a vehicle. Alternatively, of the constituent elements of the degree-of-monotony-in-scenery arithmetic apparatus 1, only a camera may be mounted on the movable body, and the other constituent elements may be located in companies, laboratories, observation offices, or rooms at home. In this case, the camera and the structural object provided in the room are connected by wireless communication.

The camera 11 shoots, for example, a scene, such as a landscape, an object, or an objective aggregate, ahead in a traveling direction of the movable body. The camera 11 is desirably mounted on the front side in the travelling direction of the movable body to shoot a scene ahead in the traveling direction of the movable body. For example, the camera 11 is desirably mounted in the vicinity of an automobile front bumper, front glass, or the like. The camera 11 may be a digital camera or analog camera. Moreover, the camera 11 may be a camera for taking a picture (still image), or a camera for shooting video (motion picture), i.e. a video camera. In any case, the camera 11 is a camera which allows serial shooting or continuous shooting.

The input device 12 generates image data on the basis of still image data or motion picture data outputted from the camera 11. The input device 12 is provided, for example, with an input interface circuit, a control apparatus for image processing, an arithmetic apparatus or the like. Incidentally, the input device 12 may be provided with an external input terminal 20 to connect an image input apparatus except the camera 11, so that the image data can be generated on the basis of the still image data and the motion picture data outputted from the image input apparatus except the camera 11. Moreover, if the camera 11 is an analog camera, the input device 12 is provided with an A/D converter (Analog/Digital converter) for converting an analog still signal or motion picture signal to a digital still signal or motion picture signal.

The obstacle recognition device 13 recognizes that an obstacle is approaching the camera 11 and the obstacle is blocking between the camera 11 and a scene which is a shooting target.

The scenic image classification device 14 is provided with: an image division device 141; a color analysis device 142; a fractal dimension analysis device 143; an artifact amount recognition device 144; an image piece classification device 145; a characteristic judgment device 146; and an image judgment device 147. The scenic image classification device 14 classifies each scenic image in any one of a plurality of scene classes set in advance.

The image division device 141 divides the image corresponding to the image data, into a plurality of image pieces.

The color analysis device 142 analyzes a color property in each image piece.

The fractal dimension analysis device 143 performs a fractal dimension analysis in each image piece.

The artifact amount recognition device 144 recognizes the amount of artifacts or an artificial portion included in each image piece.

The image piece classification device 145 specifies the type of one portion of a scene included in each image piece, on the basis of the color analysis result by the color analysis device 142, the fractal dimension analysis result by the fractal dimension analysis device 143, and the recognition result of the amount of artifacts or an artificial portion by the artifact amount recognition device 144, and it classifies each image piece on the basis of the type. Incidentally, if what is shown on the entire image corresponding to the image data is one scene, then what is shown in each image piece obtained by dividing the image corresponding to the image data corresponds to one portion of the scene. The "one portion of the scene" has the above meaning.

The characteristic judgment device 146 judges the characteristic of the entire scene included in the image corresponding to the image data on the basis of the classification result by the image piece classification device 145.

The image classification device 147 classifies the scenic image in the scene class, on the basis of the degree of characteristic by the characteristic judgment device 146.

The degree-of-monotony arithmetic device 15 is provided with: a number-of-changes count device 151: a number-of-types count device 152; and an arithmetic device 153. The degree-of-monotony arithmetic device 15 calculates the degree of monotony of the scenic images in time series, on the basis of a temporal change in the scene class obtained by the division by the scenic image classification device 14.

The number-of-changes count device 151 counts the number of times of changing the scene class (i.e. the number of changes).

The number-of-types count device 152 counts the number of types of the scene classes.

The arithmetic device 153 calculates the degree of monotony, on the basis of the number of changes counted by the number-of-changes count device 151 and the number of types counted by the number-of-types count device 152.

Each of the obstacle recognition device 13, the scenic image classification device 14, and the degree-of-monotony arithmetic device 15 is provided, for example, with a central processing unit, a multiprocessor, a micro computer, or the like.

The memory apparatus 16 is provided with a work area for performing a process by each constituent element of the degree-of-monotony-in-scenery arithmetic apparatus 1. The work area is used for, for example, an image data extraction process by the input device 12, an obstacle recognition process by the obstacle recognition device 13, an image division process by the image division device 141, a color analysis process by the color analysis device 142, a fractal dimension analysis process by the fractal dimension analysis device 143, an artifact amount recognition process by the artifact amount recognition device 144, an image piece classification process by the image piece classification device 145, a characteristic judgment process by the characteristic judgment device 146, a number-of-changes count process by the number-of-changes count device 151, a number-of-types count process by the number-of-types count device 152, an arithmetic process by the arithmetic device 153, or the like. Moreover, the memory apparatus 16 has a data storage area. In the data storage area, there are stored classification condition information used for the image piece classification process by the image piece classification device 145, a characteristic judgment equation used for the characteristic judgment process by the characteristic judgment device 146, and the like.

The control device 17 controls the operation of each of the constituent elements of the degree-of-monotony-in-scenery arithmetic apparatus 1.

The information input device 18 allows the setting of the scene class or the like to be inputted from the exterior, wherein the scene class is used in a scenic image classification process by the scenic image classification device 14.

The information display device 19 displays the result of a degree-of-monotony arithmetic process by the degree-of-monotony arithmetic device 15, or the like.

(Operations of Apparatus for Calculating Degree of Monotony in Scenery)

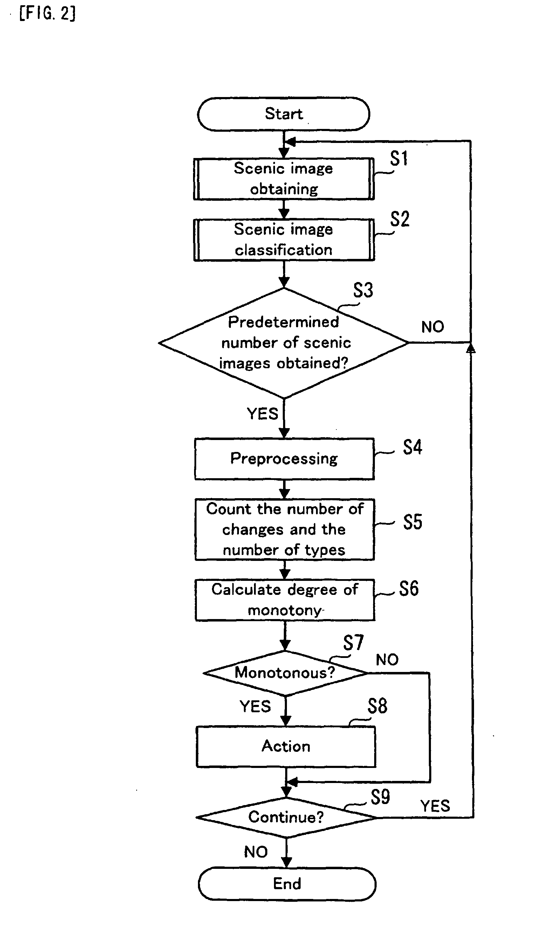

Next, with reference to FIG. 2 to FIG. 12, an explanation will be given on the operations of the apparatus for calculating the degree of monotony in scenery in the first embodiment. FIG. 2 is a flowchart showing the operations of the apparatus for calculating the degree of monotony in scenery in the first embodiment.

As shown in FIG. 2, on the degree-of-monotony-in-scenery arithmetic apparatus 1, a series of operations from a step S1 to a step S9 is performed as explained below.

(Scenic Image Obtaining Process)

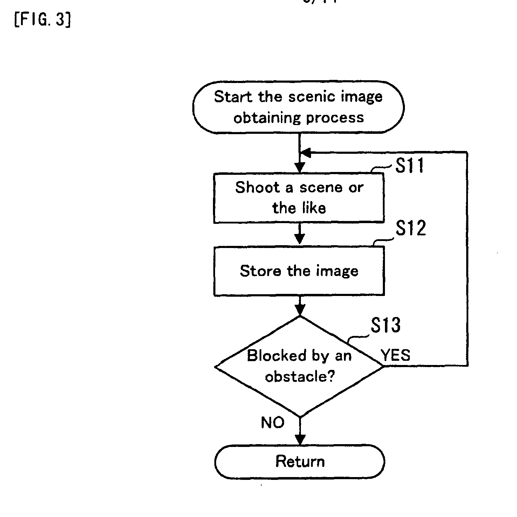

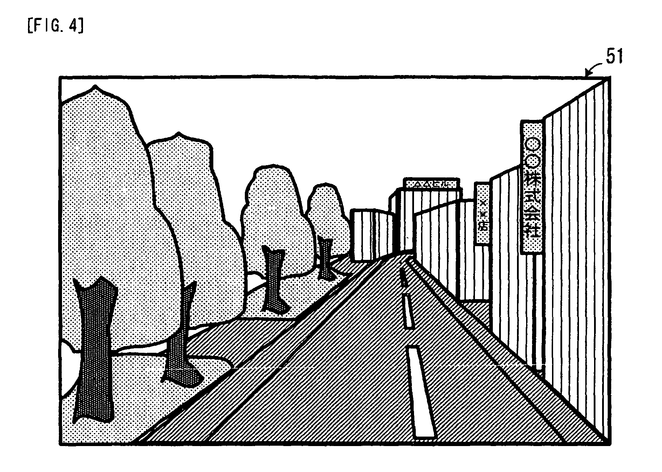

Firstly, a scenic image obtaining process will be explained with reference mainly to FIG. 3 and FIG. 4, in addition to FIG. 2. FIG. 3 is a flowchart showing the content of the scenic image obtaining process. FIG. 4 is an explanatory view showing a scenic image corresponding to scenic image data.

In FIG. 2, the degree-of-monotony-in-scenery arithmetic apparatus 1 performs the scenic image obtaining process (step S1). The scenic image obtaining process is mainly a process of shooting a scene (i.e. a landscape or the like) with the camera 11 and of storing scenic image data obtained by coding a scenic image including the scene which is the shooting target.

As shown in FIG. 3, on the degree-of-monotony-in-scenery arithmetic apparatus 1, a series of operations from a step S11 to a step S13 is performed in the scenic image obtaining process.

The degree-of-monotony-in-scenery arithmetic apparatus 1 firstly shoots a scene with the camera 11 (step S11). That is, the camera 11 shoots the scene ahead in the travel direction of the movable body, and outputs still data or motion picture data, obtained by coding the image of the scene, to the input device 12. The input device 12 obtains the still image data or motion picture data outputted from the camera 11, and generates image data on the basis of this. That is, if the data outputted from the camera 11 is the still image data, the input device 12 obtains the still image data and outputs this as the image data to the work area of the memory apparatus 16. On the other hand, if the data outputted from the camera 11 is the motion picture data, the input device 12 obtains the motion picture data, extracts one frame of data from the motion picture data, and outputs this as the image data to the work area of the memory apparatus 16.

Incidentally, as a general rule, the shooting of the scene with the camera 11 is performed in each predetermined travel distance (e.g. 50m) of the movable body or in each predetermined travel time (e.g. 5 seconds). For example, if the camera 11 is a camera for taking a picture, a shutter is clicked at predetermined intervals. On the other hand, if the camera 11 is a video camera, the shooting with the camera 11 is always continued during the travel of the movable body. Then, from the motion picture data obtained by this, one frame of data is extracted by the input device 12 at predetermined intervals. That is, the scenic image data is obtained in order, with respect to time.

A scenic image 51 in FIG. 4 shows one example of the scenic image corresponding to the scenic image data.

In FIG. 3 again, then the degree-of-monotony-in-scenery arithmetic apparatus 1 stores the scenic image data obtained by the shooting, into the work area of the memory apparatus 16 (step S12).

Then, the degree-of-monotony-in-scenery arithmetic apparatus 1 judges whether or not the scene is appropriately shot with the camera 11, i.e. whether or not the image of the scene is appropriately included in the scenic image corresponding to the scenic image data. This judgment is performed by the obstacle recognition device 13. That is, the obstacle recognition device 13 recognizes whether or not an obstacle is approaching the camera 11 and the obstacle is blocking between the camera 11 and the scene (i.e. a landscape or the like) which is the shooting target (step S13). Specifically, the obstacle recognition device 13 investigates the color or the like of the scenic image corresponding to the scenic image data, specifies an object included in the scenic image, and investigates the percentage of the object in the scenic image. Then, if the percentage of the object in the scenic image is beyond a predetermined percentage, the obstacle recognition device 13 recognizes that an obstacle is approaching the camera 11 and the obstacle is blocking between the camera 11 and the scene which is the shooting target. For example, if an automobile equipped with the camera 11 runs immediately after a bus, a truck, or the like, a view ahead in the traveling direction of the automobile is blocked by the rear surface of the bus or the truck. If the shooting is performed in this circumstance, the scenic image corresponding to the scenic image data entirely shows the rear surface of the bus or the truck. In this case, the obstacle recognition device 13 recognizes that an obstacle is approaching the camera 11 and the obstacle is blocking between the camera 11 and the scene which is the shooting target.

If the obstacle is blocking between the camera 11 and the scene which is the shooting target (the step S13: YES), the degree-of-monotony-in-scenery arithmetic apparatus 1 shoots the scene or the like again, and stores the scenic image data obtained by this time's shooting into the work area of the memory apparatus 16, instead of the scenic image data obtained by the previous shooting.

If the obstacle is not blocking between the camera 11 and the scene which is the shooting target and if the scene is appropriately shot with the camera 11 (the step S13: NO), the scenic image obtaining process is ended. Incidentally, position information, which indicates the shooting position of the camera 11, time information, which indicates the shooting year, month, date, and time point, and the like, may be stored in association with the scenic image data.

(Scenic Image Classification Process)

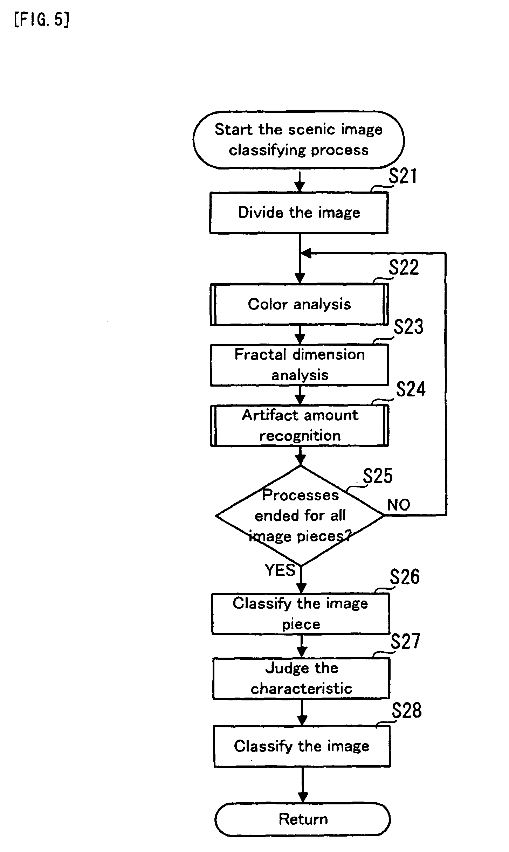

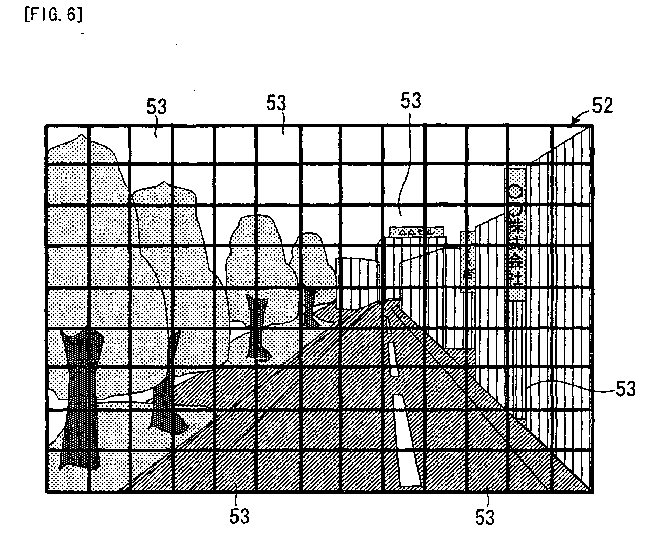

Next, the scenic image classification process will be explained with reference mainly to FIG. 5 and FIG. 6, in addition to FIG. 2. FIG. 5 is a flowchart showing the content of the scenic image classification process. FIG. 6 is an explanatory view showing that the image in FIG. 4 is divided into image pieces.

In FIG. 2 again, the degree-of-monotony-in-scenery arithmetic apparatus 1 performs the scenic image classification process, following the scenic image obtaining process (step S2). The scenic image classification process is a process of classifying the scenic image corresponding to the scenic image data obtained by the scenic image obtaining process, in the scene class set in advance.

As shown in FIG. 5, on the degree-of-monotony-in-scenery arithmetic apparatus 1, a series of operations from a step S21 to a step S28 is performed in the scenic image classification process.

(Image Division Process)

In FIG. 5, the degree-of-monotony-in-scenery arithmetic apparatus 1 firstly performs the image division process (step S21). The image division process is a process of dividing the scenic image corresponding to the scenic image data obtained by the image obtaining process, into a plurality of image pieces. The image division process is performed by the image division device 141. That is, the image division device 141 divides the scenic image corresponding to the scenic image data stored in the work area of the memory apparatus 16, into a plurality of image pieces, and stores image piece data corresponding to each image piece into the work area of the memory apparatus 16. For example, if the size of the scenic image corresponding to the scenic image data is $1280 \times 1024$ pixels, the size of the image piece is desirably about $30 \times 30$ pixels. Incidentally, the size of the image piece is desirably determined in view of the accuracy and processing speed of the color analysis process, the fractal dimension analysis process, the artifact amount recognition process, the characteristic judgment process, or the like.

Moreover, depending on the relationship between the size of the image piece and the size of the scenic image corresponding to the scenic image data, the entire scene image cannot be divided into uniform image pieces in some cases. In this case, the edge portion of the scenic image corresponding to the scenic image data may be excluded from a target of the image division process.

An image 52 in FIG. 6 shows that the image 51 in FIG. 4 is divided into a plurality of image pieces 53 by the image division process.

(Color Analysis Process)

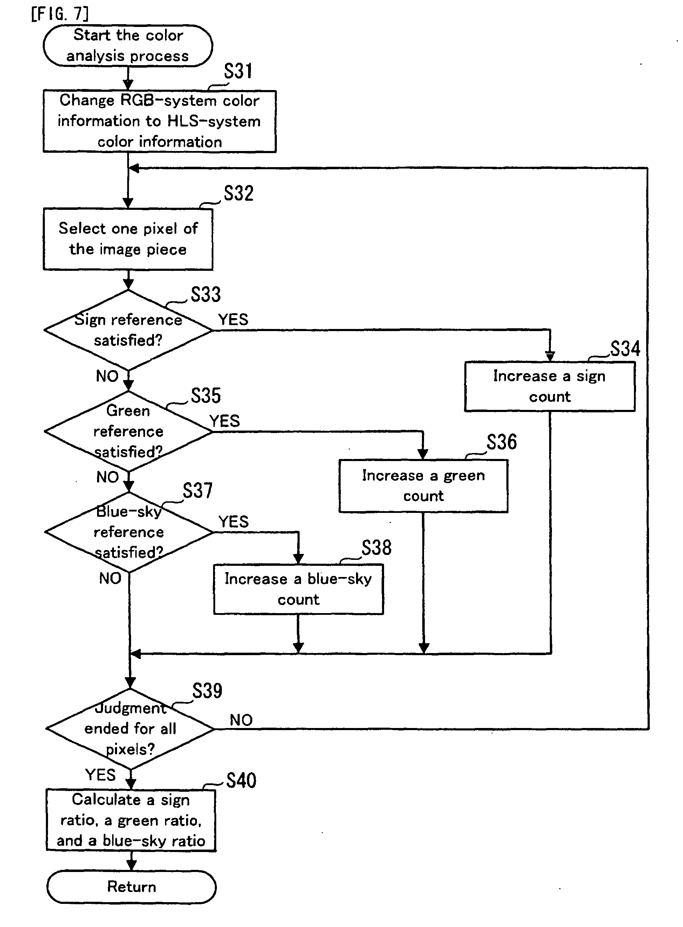

Next, the color analysis process will be explained with reference mainly to FIG. 7, in addition to FIG. 5. FIG. 7 is a flowchart showing the content of the color analysis process.

In FIG. 5 again, the degree-of-monotony-in-scenery arithmetic apparatus 1 performs the color analysis process, the fractal dimension analysis process, and the artifact amount recognition process, following the image division process (step S22 to step S24). The color analysis process, the fractal dimension analysis process, and the artifact amount recognition process are performed on each image piece. For example, the color analysis process, the fractal dimension analysis process, and the artifact amount recognition process are performed on one image piece, and after that, the color analysis process, the fractal dimension analysis process, and the artifact amount recognition process are performed on a next image piece. Then, such processes are repeated on all the image pieces which constitute the scenic image corresponding to the scenic image data. Incidentally, the order of the color analysis process, the fractal dimension analysis process, and the artifact amount recognition process is not limited to that shown in FIG. 5. For example, it may be the order of the fractal dimension analysis process, the artifact amount recognition process, the color analysis process. Moreover, the color analysis process may be performed on all the image pieces which constitute the scenic image corresponding to the scenic image data, and then, the fractal dimension analysis process may be performed on all the image pieces which constitute the scenic image corresponding to the scenic image data, and then, the artifact amount recognition process may be performed on all the image pieces which constitute the scenic image corresponding to the scenic image data.

As shown in FIG. 5, firstly, the degree-of-monotony-in-scenery arithmetic apparatus 1 performs the color analysis process on one image piece. The color analysis process is a process of analyzing a color property in each image piece. The color analysis process is performed by the color analysis device 142. Moreover, the color analysis process is performed on each pixel in the image piece.

As shown in FIG. 7, on the degree-of-monotony-in-scenery arithmetic apparatus 1, a series of operations from a step S31 to a step S40 is performed in the color analysis process.

In FIG. 7, firstly, if color information about the image piece data is RGB-system color information, the color analysis device 142 converts this color information to color-system color information using hue, lightness, and saturation as parameters, e.g. HLS-system color information (step S31).

Then, the color analysis device 142 selects one pixel on which the color analysis process has not been performed, from among the pixels included in the image piece (step S32).

Then, the color analysis device 142 judges whether or not the selected pixel satisfies a sign reference (sign judgment: step S33). That is, the color analysis device 142 judges that the pixel satisfies the sign reference when the lightness of the color of the pixel exceeds a predetermined lightness reference value and the saturation of the color of the pixel exceeds a predetermined saturation reference value. This judgment is performed on the basis of the HLS-system color information about the pixel. If the pixel satisfies the sign reference (the step S33: YES), the color analysis device 142 increases a sign count value (step S34). After that, the color analysis device 142 does not perform the judgment of a green reference and the judgment of a blue-sky reference (steps S35 and 37) and shifts the process to a step S39.

If the pixel does not satisfy the sign reference (the step S33: NO), the color analysis device 142 does not increase the sign count value. Then, the color analysis device 142 judges whether or not the pixel satisfies a green reference (green judgment: step S35). That is, the color analysis device 142 judges that the pixel satisfies the green reference when the hue of the pixel is a green area. This judgment is performed on the basis of the HLS-system color information about the pixel. If the pixel satisfies the green reference (the step S35: YES), the color analysis device 142 increases a green count value (step S36). After that, the color analysis device 142 does not perform the judgment of a blue-sky reference (step S37) and shifts the process to the step S39.

If the pixel does not satisfy the green reference (the step S35: NO), the color analysis device 142 does not increase the green count value. Then, the color analysis device 142 judges whether or not the pixel satisfies a blue-sky reference (blue-sky judgment: step S37). That is, the color analysis device 142 judges that the pixel satisfies the blue-sky reference when the hue of the pixel is a blue area. This judgment is performed on the basis of the HLS-system color information about the pixel. If the pixel satisfies the blue-sky reference (the step S37: YES), the color analysis device 14 increases a blue-sky count value (step S38).

If the pixel does not satisfy the blue-sky reference (the step S37: NO), the color analysis device 142 does not increase the blue-sky count value.

Then, in the step S39, the color analysis device 142 judges whether or not the sign judgment, the green judgment and the blue-sky judgment of all the pixels included in the image piece are performed in accordance with the flow from the step S33 to the step S38. If the sign judgment, the green judgment and the blue-sky judgment of all the pixels included in the image piece are not performed in accordance with the flow from the step S33 to the step S38 (the step S39: NO), the color analysis device 142 returns the process to the step S32, selects an unprocessed pixel (e.g. next pixel), and performs the sign judgment, the green judgment and the blue-sky judgment of the pixel in accordance with the flow from the step S33 to the step S38.

If the sign judgment, the green judgment and the blue-sky judgment of all the pixels included in the image piece are performed in accordance with the flow from the step S33 to the step S38 (the step S39: YES), then, the color analysis device 142 calculates a sign ratio, a green ratio, and a blue-sky ratio (step S40). That is, the color analysis device 142 calculates the sign ratio by dividing the sign count value by the number of the pixels in the image piece. Moreover, the color analysis device 142 calculates the green ratio by dividing the green count value by the number of the pixels in the image piece. Moreover, the color analysis device 142 calculates the blue-sky ratio by dividing the blue-sky count value by the number of the pixels in the image piece. The calculated sign ratio, green ratio, and blue-sky ratio are stored into the work area of the memory apparatus 16.

Incidentally, a counter for performing sign count, green count, and blue-sky count is provided, for example, for the color analysis device 142. Moreover, the sign count value, the green count value, and the blue-sky count value are cleared immediately before the color analysis process is performed on each image piece.

(Fractal Dimension Analysis Process)

Next, the fractal dimension analysis process will be explained with reference mainly to FIG. 5.

In FIG. 5 again, the degree-of-monotony-in-scenery arithmetic apparatus 1 performs the fractal dimension analysis process on the same image piece, following the color analysis process (step S23). The fractal dimension analysis process is a process of performing the fractal dimension analysis on each image piece. The fractal dimension analysis process is performed by the fractal dimension analysis device 143. The fractal dimension analysis process provides a fractal dimension value for the image piece. The fractal dimension value is any value of 0.0 to 2.0, for example. The fractal dimension value is stored into the work area of the memory apparatus 16. Incidentally, the fractal dimension analysis process can use a known fractal dimension analyzing method.

(Artifact Amount Recognition Process)

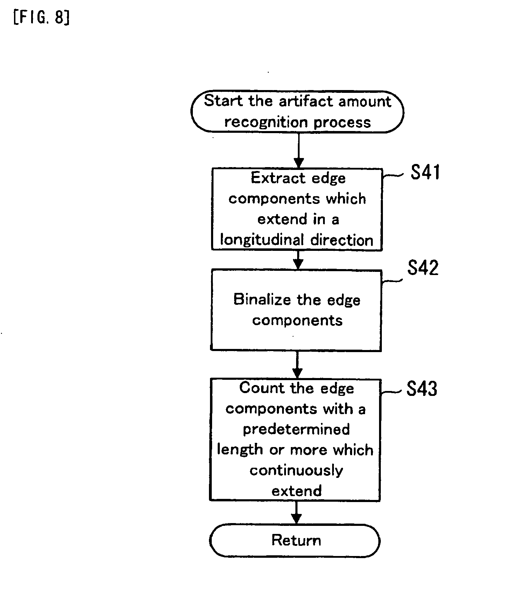

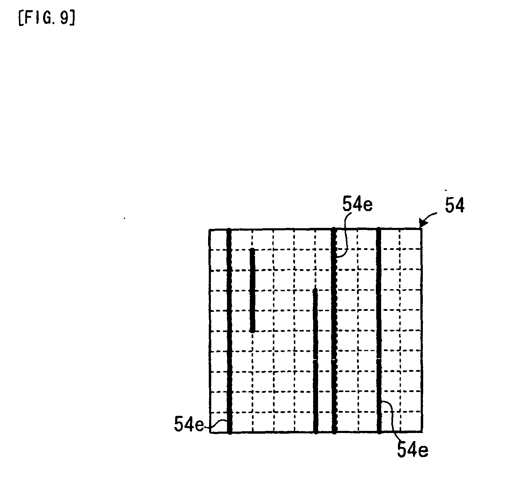

Next, the artifact amount recognition process will be explained with reference mainly to FIG. 8 and FIG. 9, in addition to FIG. 5. FIG. 8 is a flowchart showing the artifact amount recognition process. FIG. 9 is an explanatory view showing that vertical edge components are extracted from the image piece by the artifact amount recognition process.

In FIG. 5, the degree-of-monotony-in-scenery arithmetic apparatus 1 performs the artifact amount recognition process on the same image piece, following the fractal dimension analysis process (step S24). The artifact amount recognition process is a process of recognizing the amount of artifacts or an artificial portion included in each image piece. The artifact amount recognition process is performed by the artifact amount recognition device 144.

As shown in FIG. 7, on the degree-of-monotony-in-scenery arithmetic apparatus 1, a series of operations from a step S41 to a step S43 is performed in the artifact amount recognition process.

The artifact amount recognition device 144 firstly extracts edge components which extend in a longitudinal direction in the image piece, i.e. vertical edge components (step S41). For example, the lower side of the image piece matches the horizon in the shot scene, the vertical edge component is an edge component which extends in a direction of perpendicularly crossing the lower side of the image piece.

Then, the artifact amount recognition device 144 binarizes the extracted vertical edge components (step S42).

Then, the artifact amount recognition device 144 counts the vertical edge components with a predetermined length or more which continuously extend (step S43). For example, the artifact amount recognition device 144 counts the number of the vertical edge components that continuously extend from the lower edge to the upper edge of the image piece. FIG. 9 shows the vertical edge components in one image piece 54. The image piece 54 shown in FIG. 9 has three vertical edge components 54e which continuously extend from the lower edge to the upper edge of the image piece.

In general, although the artifact, such as a sign and a building, extends straight in a vertical direction from a horizontal ground, a natural object, such as a plant, does not, in many cases. Thus, by counting the vertical edge components with the predetermined length or more which continuously extend in one image piece, it is possible to know the amount of the artifacts included in one image piece.

A value that indicates the number of the vertical edge components with the predetermined length or more which continuously extend in one image piece is stored into the work area of the memory apparatus 16 as an artifact amount count value.

In FIG. 5 again, after finishing the color analysis process, the fractal dimension analysis process, and the artifact amount recognition process performed on one image piece, the degree-of-monotony-in-scenery arithmetic apparatus 1 judges whether or not the color analysis process, the fractal dimension analysis process, and the artifact amount recognition process are ended on all the image pieces which constitute the scenic image corresponding to the scenic image data (step S25). If the color analysis process, the fractal dimension analysis process, and the artifact amount recognition process are not ended on all the image pieces which constitute the scenic image corresponding to the scenic image data, the degree-of-monotony-in-scenery arithmetic apparatus 1 performs the color analysis process, the fractal dimension analysis process, and the artifact amount recognition process on an unprocessed image piece (next image piece).

(Image Piece Classification Process)

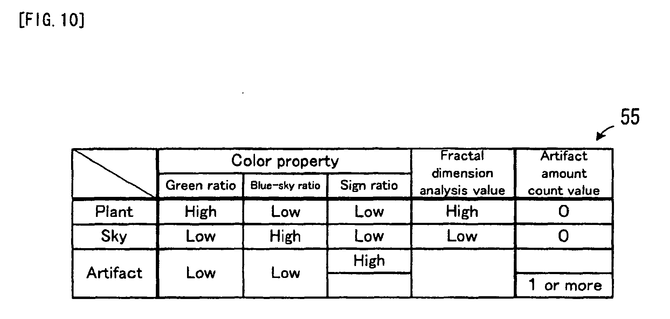

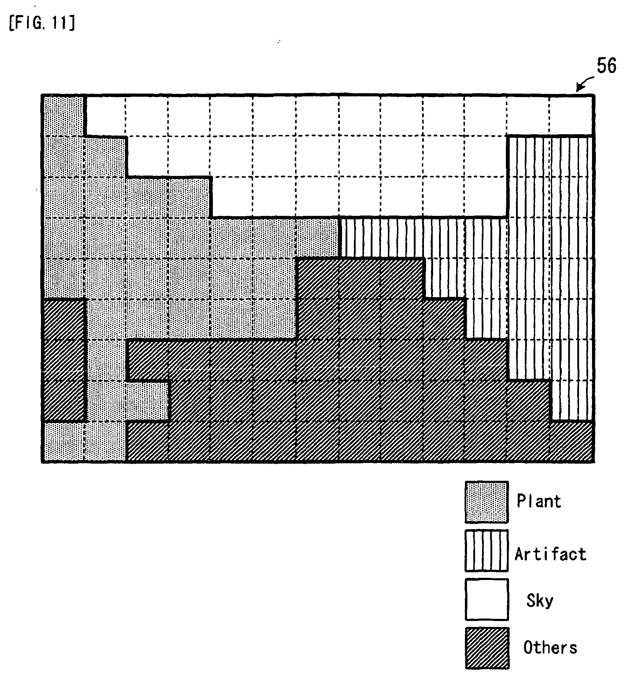

Next, the image piece classification process will be explained with reference mainly to FIG. 10 and FIG. 11, in addition to FIG. 5. FIG. 10 is an explanatory view showing classification conditions used in the image piece classification process. FIG. 11 is an explanatory view showing a result of the image piece classification by the image piece classification process.

In FIG. 5, if the color analysis process, the fractal dimension analysis process, and the artifact amount recognition process are ended on all the image pieces which constitute the scenic image corresponding to the scenic image data, the degree-of-monotony-in-scenery arithmetic apparatus 1 performs the image piece classification process (step S26). The image piece classification process is a process of specifying the type of one portion of the scene included in each image piece, on the basis of the color analysis result (the sign ratio, green ratio, and blue-sky ratio) obtained by the color analysis process, the fractal dimension analysis result (the fractal dimension analysis value) obtained by the fractal dimension analysis process, and the recognition result (the artifact amount count value) of the amount of the artifacts or artificial portion obtained by the artifact amount recognition process, and of classifying each image piece on the basis of the type. The type of one portion of the scene includes, for example, a plant, sky, artifact, and the like. In accordance with these, image piece classification items, such as "plant", "sky", "artifact", and "others", are set. The image piece classification process is performed by the image piece classification device 145. The image piece classification process uses, for example, classification conditions described in classification condition information 55 as shown in FIG. 10. The classification condition information 55 is prepared in advance on the basis of experiments or the like before product shipment, and it is stored in the data storage area of the memory apparatus 16. Incidentally, it may be also constructed such that the classification condition information 55 can be updated.

Hereinafter, a specific example of the image piece classification process is illustrated. In this specific example, each image piece included in one image data is classified by using the classification conditions described in the classification condition information 55 shown in FIG. 10. Firstly, the image piece classification device 145 reads the classification condition information 55 from the data storage area of the memory apparatus 16. Then, the image piece classification device 145 reads the sign ratio, the green ratio, the blue-sky ratio, the fractal dimension analysis value, and the artifact amount count value about one of the scenic image pieces included in the scenic image data, from the work area of the memory apparatus 16. Then, the image piece classification device 145 compares a combination of the sign ratio, the green ratio, the blue-sky ratio, the fractal dimension analysis value, and the artifact amount count value about the image piece with the classification conditions described in the classification condition information 55. Then, the image piece classification device 145 judges whether or not the combination of the sign ratio, the green ratio, the blue-sky ratio, the fractal dimension analysis value, and the artifact amount count value about the image piece is applicable to the classification conditions. Then, the image piece classification device 145 specifies the type of one portion of the scene included in the image piece on the basis of the judgment result, and classifies the image piece on the basis of the type.

For example, if the green ratio about the image piece is high (e.g. more than 0.5), the blue-sky ratio is low (e.g. 0.5 or less), the sign ratio is low (e.g. 0.5 or less), the fractal dimension analysis value is high (e.g. more than 1.0), and the artifact amount count value is 0, then the type of one portion of the scene included in the image piece is specified to be the plant, and the image piece is classified in the image piece classification item of "plant".

Moreover, if the green ratio about the image piece is low (e.g. 0.5 or less), the blue-sky ratio is high (e.g. more than 0.5), the sign ratio is low (e.g. 0.5 or less), the fractal dimension analysis value is low (e.g. 1.0 or less), and the artifact amount count value is 0, then the type of one portion of the scene included in the image piece is specified to be the sky, and the image piece is classified in the image piece classification item of "sky".

Moreover, if the green ratio about the image piece is low (e.g. 0.5 or less), the blue-sky ratio is low (e.g. 0.5 or less), and the sign ratio is high (e.g. more than 0.5), then the type of one portion of the scene or the like included in the image piece is specified to be the artifact, and the image piece is classified in the image piece classification item of "artifact". Moreover, if the green ratio about the image piece is low (e.g. 0.5 or less), the blue-sky ratio is low (e.g. 0.5 or less), and the artifact amount count value is 1 or more, then the type of one portion of the scene or the like included in the image piece is also specified to be the artifact, and the image piece is classified in the image piece classification item of "artifact".

Moreover, if the combination of the sign ratio, the green ratio, the blue-sky ratio, the fractal dimension analysis value, and the artifact amount count value about the image piece is not applicable to any one of the classification conditions indicated by the classification condition information, the image piece is classified in the image piece classification item of "others".

The image piece classification result by the image piece classification process is stored into the work area of the memory apparatus 16. For example, the image piece classification result may be replaced by a classification number and is stored, such as a classification number 1 if the image piece classification result is "plant", a classification number 2 if "sky", a classification number 3 if "artifact", and a classification number 4 if "others".

An image chart 56 in FIG. 11 displays the image piece classification result of each image piece obtained by the image piece classification process, with a different color for each classification result. This is the result of classifying each image piece 53 in the image 52 shown in FIG. 6 by using the classification condition information 55 shown in FIG. 10. By comparing the image 52 in FIG. 6 with the image chart 56 in FIG. 11, it is found that the actual scene shown in the image 52 matches the classification result displayed in the image chart 56. For example, trees are shown on the left side of the image 52, and the image piece classification result of "plant" is displayed on the left side of the image chart 56. Moreover, the sky is shown on the upper side of the image 52, and the image piece classification result of "sky" is displayed on the upper side of the image chart 56. Moreover, buildings are shown on the right side of the image 52, and the image piece classification result of "artifact" is displayed on the right side of the image 52. Moreover, a road is shown on the lower side of the image 52. The road is judged to be neither the plant, nor the sky, nor the artifact. Thus, the classification result of "others" is displayed on the lower side of the image chart 56.

(Characteristic Judgment Process)

Next, the characteristic judgment process will be explained with reference mainly to FIG. 5, FIG. 6, and FIG. 11.

In FIG. 5 again, the degree-of-monotony-in-scenery arithmetic apparatus 1 then performs the characteristic judgment process (step S27). The characteristic judgment process is a process of judging the characteristic of the entire scene included in the scenic image corresponding to the scenic image data, on the basis of the image piece classification result obtained by the image piece classification process. The characteristic of the entire scene includes, for example, a nature level, an urban level, an open road level, and the like. The characteristic judgment process is performed by the characteristic judgment device 146. Moreover, the characteristic judgment process uses a characteristic judgment equation. The characteristic judgment equation is prepared in advance on the basis of experiments or the like before product shipment, and it is stored in the data storage area of the memory apparatus 16. Incidentally, it may be also constructed such that the characteristic judgment equation can be changed.

In the characteristic judgment process, the characteristic judgment device 146 firstly totalizes the image piece classification results about the image pieces which constitute the scenic image corresponding to one scenic image data. For example, of the image pieces which constitute the scenic image corresponding to one scenic image data, the number of image pieces with the image piece classification result of "plant" (referred to as the "number of plants"), the number of image pieces with the image piece classification result of "sky" (referred to as the "number of sky"), the number of image pieces with the image piece classification result of "artifact" (referred to as the "number of artifacts"), and the number of image pieces with the image piece classification result of "others" are counted. Referring to the case that the image piece classification result about each image piece is as shown in the image chart 56 in FIG. 11, the number of plants is 30. The number of sky is 28. The number of artifacts is 20. The number of image pieces with the image piece classification result of "others" is 30. Then, the characteristic judgment device 146 stores the totalized classification results into the work area of the memory apparatus 16.

Then, the characteristic judgment device 146 reads the characteristic judgment equation from the data storage area of the memory apparatus 16. The characteristic judgment equation is an equation for judging the characteristic of the scene included in the image. The characteristic judgment equation exists for each type of the scene included in the image, i.e. the nature level, the urban level, the open road level, or the like. Here, the characteristic judgment equation for judging the nature level is referred to as a nature level judgment equation, and the characteristic judgment equation for judging the urban level is referred to as an urban level judgment equation, and the characteristic judgment equation for judging the open road level is referred to as an open road level judgment equation.

As the characteristic judgment equation, there are various equations depending on the type of the characteristic of the scene included in the scenic image, such as the nature level judgment equation, the urban level judgment equation, and the open road level judgment equation. Each of these equations, however, has the common structure. That is, there is a basic equation for the characteristic judgment equation, and what embodies the basic equation is the nature level judgment equation, the urban level judgment equation, or the open road judgment equation. The basic equation of the characteristic judgment equation is as follows.

$$\text{Characteristic of the scene} = (\text{the number of plus elements} - \text{the number of minus elements}) / \text{the total number of judgment elements} \dots (1)$$

In the equation (1), the number of plus elements is the number of image pieces with the image piece classification result that acts to emphasis the characteristic of the scene which is a characteristic judgment target. The number of minus elements is the number of image pieces with the image piece classification result that acts to weaken the characteristic of the scene which is a characteristic judgment target. The total number of judgment elements is the total number of image pieces with the image piece classification result that is used for the characteristic judgment.

In the case of the judgment of the nature level, the number of plants is the number of plus elements, and the number artifacts is the number of minus elements. Moreover, the image piece classification results used for the judgment of the nature level are "plant", "sky", and "artifact". Thus, the total number of judgment elements is a sum of the number of plants, the number of sky, and the number of artifacts. Incidentally, the number of sky is neither the number of plus elements nor the number of minus elements; however, it is included in the total number of judgment elements. That is, the nature level judgment equation is, for example, as follows.

$$\text{Nature level} = (\text{the number of plants} - \text{the number of artifacts}) / \text{the total number of judgment elements} \dots (2)$$

$$\text{wherein the total number of judgment elements} = \text{the number of plants} + \text{the number of sky} + \text{the number of artifacts} \dots (3)$$

The value of the nature level is any value of -1 to 1. If the nature level is the lowest, it is -1. If the nature level is the highest, it is +1. For example, if the nature level of the image 52 in FIG. 6 is calculated on the basis of the image piece classification result of each image piece shown in the image chart 56 in FIG. 11, it is as follows. That is, in the image chart 56, the number of plants is 30, the number of sky is 28, and the number of artifacts is 20, so that the nature level is

$$(30 - 20) / 78 = 0.13 \dots (4).$$

A nature level of 0 is the intermediate value of the nature level. So if it is evaluated "to appropriately have nature" when the nature level is 0, then a nature level of 0.13 can be evaluated "to appropriately have nature", for example.

Moreover, in the case of the judgment of the urban level, the number of artifacts is the number of plus elements. The number of plants is the number of minus elements. The number of sky is the number of minus elements. Moreover, the image piece classification results used for the judgment of the urban level are "plant", "sky", and "artifacts". Thus, the total number of judgment elements is a sum of the number of plants, the number of sky, and the number of artifacts. That is, the urban level judgment equation is, for example, as follows.

$$\text{Urban level} = \{\text{the number of artifacts} - (\text{the number of plants} + \text{the number of sky}) / \text{the total number of judgment elements} \dots (5)$$

$$\text{wherein the total number of judgment elements} = \text{the number of plants} + \text{the number of sky} + \text{the number of artifacts} \dots (6)$$

The value of the urban level is any value of -1 to 1. If the urban level is the lowest, it is -1. If the urban level is the highest, it is +1. For example, if the urban level of the image 52 in FIG. 6 is calculated on the basis of the classification result of each image piece shown in the image chart 56 in FIG. 11, it is as follows. That is, in the image chart 56, the number of plants is 30, the number of sky is 28, and the number of artifacts is 20, so that the urban level is

$$\{20 - (30 + 20) / 78 = -0.49 \dots (7).$$

An urban level of 0 is the intermediate value of the urban level. So if it is evaluated "to be appropriately urbanized" when the urban level is 0, then an urban level of -0.49 can be evaluated "not to be appropriately urbanized", for example.

Moreover, in the case of the judgment of the open road level, the number of sky is the number of plus elements. The number of plants is the number of minus elements. Here, the open road level indicates the extent that a scene around the road is open without tall trees and buildings. Moreover, the image piece classification results used for the judgment of the open road level are "plant", "sky", and "artifact". Thus, the total number of judgment elements is a sum of the number of plants, the number of sky, and the number of artifacts. Incidentally, the number of artifacts is neither the number of plus elements nor the number of minus elements, but it is included in the total number of judgment elements. That is, the open road level judgment equation is, for example, as follows.

$$\text{Open road level} = \{\text{the number of sky} - \text{the number of plants}) / \text{the total number of judgment elements} \dots (8)$$

$$\text{wherein the total number of judgment elements} = \text{the number of plants} + \text{the number of sky} + \text{the number of artifacts} \dots (9)$$

The value of the open road level is any value of -1 to 1. If the open road level is the lowest, it is -1. If the open road level is the highest, it is +1. For example, if the open road level of the image 52 in FIG. 6 is calculated on the basis of the image piece classification result of each image piece shown in the image chart 56 in FIG. 11, it is as follows. That is, in the image chart 56, the number of plants is 30, the number of sky is 28, and the number of artifacts is 20, so that the open road level is

$$\{20 - 30) / 78 = -0.03 \ldots (10).$$

An open road level of 0 is the intermediate value of the open road level. So if it is evaluated that "the scene around the road is appropriately open" when the open road level is 0, then an open road level of -0.03 can be evaluated as that "the scene around the road is appropriately open", for example.

The characteristic judgment device 146 reads the nature level judgment equation from the data storage area of the memory apparatus 16 when judging the nature level in the characteristic judgment process. The characteristic judgment device 146 reads the urban level judgment equation from the data storage area of the memory apparatus 16 when judging the urban level. The characteristic judgment device 146 reads the open road level judgment equation from the data storage area of the memory apparatus 16 when judging the open road level in the characteristic judgment process.

Then, the characteristic judgment device 146 reads the number of each image piece (the totalized results) with the image piece classification result necessary for the characteristic judgment, such as nature level judgment, urban level judgment, or open road level judgment, from the work area of the memory apparatus 16.

Then, the characteristic judgment device 146 applies the number of each image piece read from the work area of the memory apparatus 16, to the characteristic judgment equation (the nature level judgment equation, the urban level judgment equation, the open road level judgment equation, or the like) to perform calculation. By this, the degree of characteristic is obtained which indicates the characteristic of the scene included in the scenic image corresponding to one scenic image data which is a judgment target. That is, there are obtained the degree of nature which indicates the nature level of the scenic image corresponding to one scenic image data which is a judgment target, the degree of urbanization which indicates the urban level of the scenic image corresponding to one scenic image data which is a judgment target, or the degree of an open road which indicates the open road level of the scenic image corresponding to one scenic image data which is a judgment target. For example, if the degree of nature, the degree of urbanization, and the degree of an open road of the image 52 in FIG. 6 are calculated on the basis of the classification result of each image piece shown in the image chart 56 in FIG. 11, they are 0.13, -0.49, and -0.03, respectively (refer to the equations (4), (7), and (10)). Incidentally, the degree of characteristic is a specific example of characteristic information.

Then, the characteristic judgment device 146 stores the degree of characteristic, i.e. the degree of nature, the degree of urbanization, the degree of an open road or the like, into the work area of the memory apparatus 16. Incidentally, at this time, the image characteristic judgment device 146 may store the degree of characteristic of the scene included in the scenic image corresponding to the scenic image data which is the judgment target, in association with the position information which indicates the scenic image shooting position and the time information which indicates the scenic image shooting year, month, date, and time point.

Incidentally, in the aforementioned characteristic judgment process, each image piece may be weighted in accordance with the distance between the camera 11 and one portion of the scene included in each image piece. That is, if the distance between the camera 11 and one portion of the scene included in a certain image piece is longer than the distance between the camera 11 and one portion of the scene included in another image piece, the characteristic judgment device 146 may perform the characteristic judgment process after increasing the weight for the relevant image piece more than that for another image piece.

(Image Classification Process)

Next, an image classification process will be explained with reference mainly to FIG. 5 and FIG. 6.

In FIG. 5 again, the degree-of-monotony-in-scenery arithmetic apparatus 1 then performs the image classification process (step S28). The image classification process is a process of classifying the scenic image corresponding to the scenic image data, in the scene class set in advance, on the basis of the degree of characteristic obtained by the characteristic judgment process. The image classification process is performed by the image classification device 147. The scene class is an item for indicating the characteristic of the scene corresponding to the scenic image. The scene class is set in advance by the setting at a factory or a user's operation or the like, and it is stored in the data storage area of the memory apparatus 16. As the scene class, for example, three classes of "forest", "town", and "open road" are set. Incidentally, in order to classify the scenic image that is not classified into those scene classes, "others" maybe further set.

In the image classification process, the image classification device 147 classifies the scenic image in the scene class, in accordance with an image classification condition, on the basis of the degree of characteristic about the scenic image corresponding to one scenic image data. For example, the scenic image is classified in scene class in accordance with such an image classification condition that the scenic image with the highest degree (wherein 0.5 or more) of a plurality of degrees of characteristic is classified in the scene class corresponding to the highest degree of characteristic. That is, if the nature level is the highest among the plurality of degrees of characteristic about the scenic image, the scenic image is classified in "forest", if the urban level is highest among the plurality of degrees of characteristic about the scenic image, the scenic image is classified in "town", and if the open road level is highest among the plurality of degrees of characteristic about the scenic image, the scenic image is classified in "open road". If, however, all the nature level, the urban level, and the open road level are less than 0.5, the scenic image is classified in "others". If the scene classification based on the degree of characteristic is performed on the image 52 in FIG. 6, it is as follows. The nature level, the urban level, and the open road level of the image 52 are 0.13, -0.49, and -0.03, respectively (refer to the equations (4), (7), and (10), and all the nature level, the urban level, and the open road level are less than 0.5. Thus, the image 52 is classified in "others". Incidentally, as the scene class, "waterfront", "rice field", "avenue" and the like may be set.

Then, the image classification device 147 stores the result of image classification (i.e. scene classification) by the image classification process, into the work area of the memory apparatus 16. Incidentally, the image classification result may be replaced by numbers, alphabets, marks, or the like and then stored.

(Preprocessing)

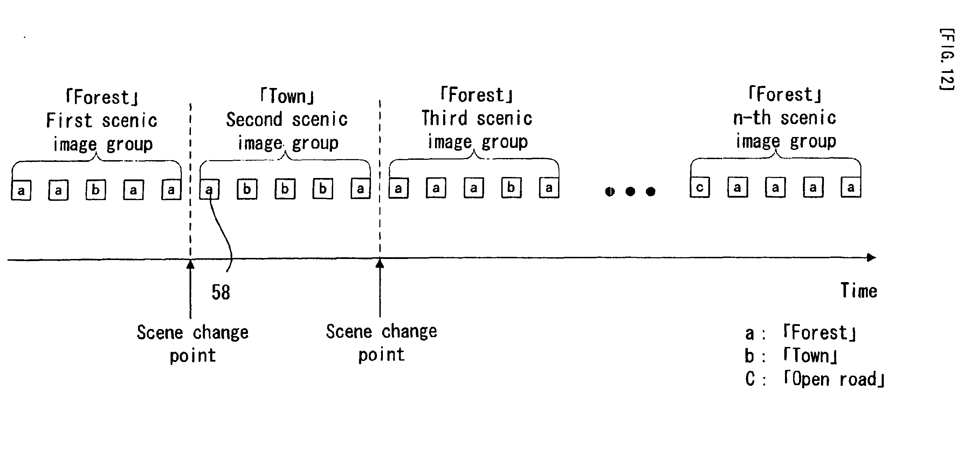

Next, preprocessing will be explained with reference to FIG. 12 in addition to FIG. 2. FIG. 12 is an explanatory view showing a relationship between the scenic images and scenic image groups.

In FIG. 2 again, after the image classification process is ended, the degree-of-monotony-in-scenery arithmetic apparatus 1 judges whether or not a necessary number of scenic images for the degree-of-monotony arithmetic process described later are obtained (step S3). If the necessary number of scenic images are not obtained (the step S3: NO), the aforementioned processes in the step S2 and the step S3 are performed in order to obtain the necessary number of scenic images. If the necessary number of scenic images are obtained (the step S3: YES), the degree-of-monotony-in-scenery arithmetic apparatus 1 performs the preprocessing (step S40). In the preprocessing, each five of the obtained scenic images are grouped as one scenic image group, and the scenic image group is classified in the scene class, on the basis of the scene classes in which the scenic images included in one scenic image group are classified. For example, of the scene classes of the scenic images included in one scenic image group, the scene class with the greatest numbers is regarded as the scene class of the scenic image group. That is, a plurality of scenic images 58, which are targets as shown in FIG. 12, are divided into a first scenic image group to an N-th scenic image group, in units of five scenic images in time series. Referring to a third scenic image group, four of the five scenic images 58 included in the third scenic image group are classified in the scene class of "forest" (shown by "a" in FIG. 12), and one is classified in the scene class of "town" (shown by "b" in FIG. 12), by the aforementioned image classification process. Thus, the scene class of the third scenic image group is set to "forest". Such preprocessing can remove a local change in the scene class, which can be caused in passing through a crossroad (which can be classified in "town") in a forest, as a noise. That is, it is possible to remove a change which is actually hardly sensed as a change in scenery, for a driver or a fellow passenger, from a series of scenes.

Then, the result of scene classification of the scenic image group by the preprocessing is stored into the work area of the memory apparatus 16.

(Degree-of-Monotony Arithmetic Process)

Next, the degree-of-monotony arithmetic process will be explained with reference mainly to FIG. 2 and FIG. 12.

In FIG. 2 again, after the preprocessing is ended, the degree-of-monotony-in-scenery arithmetic apparatus 1 performs the number-of-changes count process and the number-of-types count process (step S5).

The number-of-changes count process is a process of counting the number of times of changing the scene class in which the scenic image group is classified, for a predetermined number of scenic images. The number-of-changes count process is performed by the number-of-changes count device 151. For example, as shown in FIG. 12, if the scene class of the first scenic image group is "forest" and the scene class of the second scenic image group is "town", the number-of-changes count device 151 counts one change. Incidentally, a time point at which the scene class of the scenic image group is changed in time series is referred to as a scene change point.

The number-of-types count process is a process of counting the number of types of the scene classes in which the scenic image groups are classified. The number-of-types count process is performed by the number-of-types count device 152. As shown in FIG. 12, for example, if the scene class of the first scenic image group is "forest", the scene class of the second scenic image group is "town", and the scene class of the third scenic image group is "forest", the number of types between the first scenic image group and the third scenic image group is counted as "2".

Either one of the number-of-changes count process and the number-of-types count process may be performed before the other. Alternatively, these processes may be performed simultaneously.

Then, the number of changes by the number-of-changes count process and the number of types by the number-of-types count process are stored into the work area of the memory apparatus 16.

In FIG. 2 again, after the number-of-changes count process and the number-of-types count process are ended, the degree-of-monotony-in-scenery arithmetic apparatus 1 performs the degree-of-monotony arithmetic process (step S6).

The degree-of-monotony arithmetic process is a process of calculating the degree of monotony, on the basis of the number of changes by the number-of-changes count process and the number of types by the number-of-types count process. The degree-of-monotony arithmetic process is performed by the arithmetic device 153. In the degree-of-monotony arithmetic process, the calculation is performed to reduce the degree of monotony as the product of the number of changes multiplied by the number of types increases, and to increase the degree of monotony as the product of the number of changes multiplied by the number of types reduces. That is, an arithmetic equation for the degree of monotony by the degree-of-monotony arithmetic device is as follows.

$$\text{Degree of monotony}$$

$$= 1 - (\text{the number of changes} \times \text{the number of types}) /$$

$$(\text{the total number of scenic image groups} \times \text{the total number of types}) \ldots (11)$$

In the equation (11), the "total number of scenic image groups" means the number of the scenic image groups which are targets for calculating the degree of monotony. Moreover, the "total number of types" means the number of the plurality of scene classes set in advance. For example, if the plurality of scene classes set in advance are "forest", "town", "open road", and "others", the total number of types is four. Incidentally, "others" may be excluded from the total number of types. Moreover, in order to express the degree of monotony in a range of 0 to 100, in the equation (11), the counted number of times may be replaced by "the counted number of times -1", and the right side may be multiplied by 100.

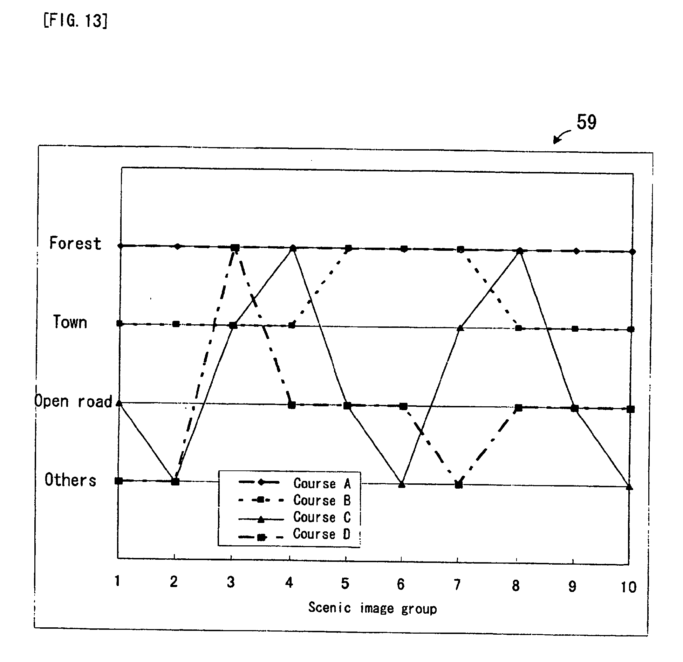

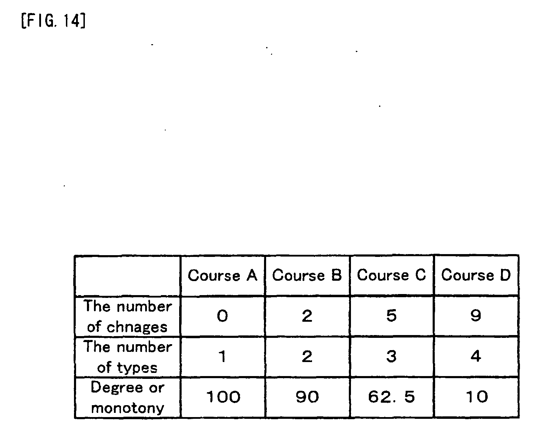

Now, with reference to FIG. 13 and FIG. 14, a specific example of the degree-of-monotony arithmetic process will be explained. FIG. 13 is a graph showing the change in the scene classes in the scenic image groups. FIG. 14 is a table showing the number of changes, the number of types, and the degree of monotony, in each course in FIG. 13.

A classification result 59 in FIG. 13 shows a result of obtaining the scenic images by the degree-of-monotony-in-scenery arithmetic apparatus 1 while the automobile runs in four different courses (i.e. course A, course B, course C, and course D) and classifying each scenic image group in the scene class. In the classification result 59, the horizontal axis indicates the scenic image group, and the vertical axis indicates the scene class. Incidentally, in the embodiment, the scenic image group targets a first scenic image group to a tenth scenic image group, and as the scene class, four classes of "forest", "town", "open road", and "others" are set.

As shown in FIG. 13, the course A is a course of traveling in a forest. All the scene classes of the first to tenth scenic image groups are "forest".

The course B is a course of passing through the forest during a drive in a city. The scene classes of the first to third scenic image groups and the eighth to tenth scenic image groups are "town". The scene classes of the fourth to seventh scenic image groups are "forest".

The course C and the course D are courses of passing through the forest, the city, an open road and the like. In each of the courses, as shown in the classification result 59, the scenic image groups are classified in "forest", "town", "open road", and "others".

FIG. 14 shows the number of changes, the number of types, and the degree of monotony, in the four courses in FIG. 13.

The number of changes and the number of types are counted by the number-of-changes count process and the number-of-types count process, as described above. FIG. 14 shows that the number of changes is 0, 2, 5, and 9 and the number of types is 1, 2, 3, and 4, in the course A, the course B, the course C, and the course D, respectively.

The degree of monotony in the course A is calculated as follows by the aforementioned equation (11) (wherein the left side is multiplied by 100 in order to express the degree of monotony in a range of 0 to 100).

$$(1 - (0 \times 1) / (10 \times 4)) \times 100 = 100...(12)$$

Similarly, the degree of monotony in the course B is calculated as follows.
$$(1 - (2 \times 2) / (10 \times 4)) \times 100 = 90...(13)$$

Similarly, the degree of monotony in the course C is calculated as follows.
$$(1 - (5 \times 3) / (10 \times 4)) \times 100 = 62.5...(14)$$

Similarly, the degree of monotony in the course D is calculated as follows.
$$(1 - (9 \times 3) / (10 \times 4)) \times 100 = 10...(15)$$

Comparing the degree of monotony in each course as calculated above, it can be judged that the degree of monotony in the course A is the largest, 100, and the degree of monotony in the course D is the smallest, 10. That is, the course A is the most monotonous, and the course D is the least monotonous, i.e. most variable.

Then, the degree of monotony by the degree-of-monotony arithmetic process is stored into the work area of the memory apparatus 16.

(Action Process)

In FIG. 2 again, the degree-of-monotony-in-scenery arithmetic apparatus 1 judges whether or not the scenic images are monotonous (step S7). The judgment of whether or not the scenic images are monotonous is performed by setting, in advance, a reference for the degree of monotony by the degree-of-monotony arithmetic process. For example, if a certain threshold value is set for the degree of monotony and the threshold value is exceeded, it is judged that the series of scenic images is monotonous. For example, if a threshold value for the degree of monotony is set to 80 and if the degree of monotony is greater than or equal to 80, it is judged to be monotonous. That is, for example, referring to the aforementioned courses A to D with reference to FIG. 13 and FIG. 14, the course A and the course B are judged "to be monotonous" because the degree of monotony is greater than or equal to 80, and the course C and the course D are judged "not to be monotonous" because the degree of monotony is less than 80.

If it is judged that the scenic images are not monotonous (the step S7: NO), it is judged whether or not the operations of the degree-of-monotony-in-scenery arithmetic apparatus are continued (step S9). If the operations are continued (the step S9: YES), the operations are performed from the step S1. If the operations are not continued (the step S9: NO), the degree-of-monotony-in-scenery arithmetic apparatus ends the operations.

If it is judged that the scenic images are monotonous (the step S7: YES), an action process is performed (step S8). The action process is a process of preventing the driver from dozing off or the like because the degree of monotony is high. For example, the action process is performed by the information display device 19. The information display device 19 displays warning information for the driver. Incidentally, as the action process, for example, alerting, changing a display method of a display apparatus, guiding the driver to another route by car navigation, guiding the driver to a place to rest, changing music, video, and images, or similar actions may be performed. As the action process, what provides a change in circumstances for the driver or the fellow passenger is desired. Moreover, the action process may increase or reduce the frequency or degree, in accordance with the extent of the degree of monotony.

An explanation will be given on a specific action process when the degree-of-monotony-in-scenery arithmetic apparatus 1 is built in a car navigation apparatus.

The car navigation apparatus, if judging that a monotonous road continues when setting the route by using car navigation or when obtaining a current position in a free travel state without the route setting, announces a distance of the monotonous route continued ahead (e.g. displaying "Next, a monotonous road continues 5km" etc.), guides the driver to a resting place before the drive in the monotonous route, guides the driver so as to change the currently travelling route. Moreover, the car navigation apparatus guides the driver, including a change in the degree of monotony on the route (e.g. displaying "a monotonous road continues another 3km before a non-monotonous road" etc.). If searching for another route again, the car navigation apparatus may guide the driver to a route with the lower degree of monotony or a route with different scenery from the current scenery. For example, in the case of a drive on a monotonous road in a "forest", the route can be changed to a monotonous road in a "town". This causes one change point, so that it is effective. Moreover, after a certain-time travel or a certain-distance travel, the car navigation apparatus may guide the driver to the route, in combination with information about the driver's fatigue degree or the like.

Moreover, the car navigation apparatus or a computer which applies the function sets the route in view of the degree of monotony, in the route setting using map information which reflects the degree of monotony. For example, of the route to a destination, all the monotonous routes are avoided. In the route to the destination, if there is a certain-distance travel in the monotonous route, the monotonous route is avoided on the way. Similarly, if there is a certain-distance travel in the monotonous route, the car navigation apparatus or the computer guides the driver so as to set a resting point on the way in advance. Moreover, in the case of the route setting using a toll road or an express way, if the monotonous route continues long, the car navigation apparatus or the computer guides the driver a point to rest, such as a service area and a parking area, in advance.

Moreover, the car navigation apparatus or a computer which applies the function displays the degree of monotony in addition to time, a distance, and a toll if the search result of the route to the destination can be selected from a plurality of candidates, in the route setting using the map information which reflects the degree of monotony. For example, the total of the degree of monotony on the route is calculated in each route and is displayed for comparison. It is easy to compare the degree of monotony in each route, by displaying the total of the degree of monotony calculated in each section or by dividing the sum of the degree of monotony calculated in each section by the number of sections and displaying the average value. Moreover, in the search result of the route to the destination, "avoid monotony" may be displayed in addition to "prioritize distance", "prioritize time", "avoid toll", and the like. In the case of "avoid monotony", not only the monotonous route is avoided, but also the resting place or the like may be automatically set.

Moreover, the car navigation apparatus stores the past travel history of the movable body with reference to the position information, the route, the number of times of passing through a certain section, or the like. The car navigation apparatus varies the aforementioned value for the judgment of being monotonous, on the basis of the travel history. For example, the value for the judgment of being monotonous is set to 90 for a route traveled for the first time, and the value for the judgment of being monotonous is set to 70 for a route traveled several times.

Moreover, it is assumed that the car navigation apparatus has a device for measuring biological information, such as the fatigue degree or sleepiness based on the skin temperature and expression of the driver detected by using a camera, and the driver's heart rate. If the fatigue degree or sleepiness exceeds a certain threshold value and if it is traveling in the monotonous route or the monotonous road continues as it is, the car navigation apparatus judges that there is a high risk of drowsy driving and guides the driver so as to change the route or guides the driver to the resting point.

Moreover, the car navigation apparatus may display the driver's fatigue degree or sleepiness on the route, with the color information, an icon, or the like. This enables the driver to visually confirm the fatigue degree or sleepiness is increasing during the travel in the monotonous route.

Moreover, if the car navigation apparatus has a device for detecting a fellow passenger, for example, an in-vehicle camera, a seat sensor, and a manual switch, the car navigation apparatus performs an action by combining the detection result and the result of the degree-of-monotony calculation. For example, if a child's face is detected as the fellow passenger, the value for the judgment of being monotonous is changed from 80 to 60 because a child likely really gets bored with the exterior scenery.

As explained above, according to the apparatus for calculating the degree of monotony in scenery in the embodiment, it is possible to calculate the degree of monotony which reflects the monotony of the scenes corresponding to the scenic images. Thus, by providing a certain threshold value for the degree of monotony, it is possible to judge whether or not the scenes corresponding to the scenic images are monotonous, in other words, whether or not the travel route of the movable body is monotonous. Moreover, by providing a change in circumstances for the driver in accordance with the degree of monotony, it is possible to prevent the drowsy driving. Alternatively, by changing music, video, or the like in the movable body, it is possible to prevent the fellow passenger from getting bored with being in the movable body.

<Another Embodiment 1>

In the aforementioned degree-of-monotony-in-scenery arithmetic apparatus 1, the degree of monotony is calculated only from the scenic images obtained by the camera 11 or the like; however, the degree of monotony may be calculated by using information except the images. That is, information about a vehicle exterior, a vehicle interior, or a vehicle may be obtained by an input sensor, and the obtained information may be used for the calculation of the degree of monotony. Moreover, a plurality of types of the information obtained by the input sensor may be obtained simultaneously. Moreover, the information obtained by the input sensor may be obtained simultaneously with the scenic images obtained with the camera 11 or the like.

For example, in addition to the scenic images obtained with the camera 11 or the like, a vehicle exterior sound is obtained as the information except the scenic images, by using a sound collecting microphone as the input sensor. Then, the degree of monotony is calculated from the scenic images and the vehicle exterior sound. In this case, even in the route in which the degree of monotony is calculated only from the scenic images obtained with the camera 11 or the like and the degree of monotony is judged to be high, the degree of monotony can be judged to be low if there is a change in the vehicle exterior sound obtained with the sound collecting microphone.

Alternatively, in addition to the scenic images obtained with the camera 11 or the like, automobile drive information, such as a steering operation and an accelerator operation, is obtained as the information except the scenic images. Then, the degree of monotony is calculated from the scenic images and the automobile drive information. In this case, even in the route in which the degree of monotony is calculated only from the scenic images obtained with the camera 11 or the like and the degree of monotony is judged to be high, the degree of monotony can be judged to be low if the steering operation and the accelerator operation are performed frequently.

<Another Embodiment 2>

In the aforementioned degree-of-monotony-in-scenery arithmetic apparatus 1, the degree of monotony is calculated only from the scenic images obtained by the camera 11 or the like; however, the degree of monotony may be calculated by using not only the scenic images but also an image indicating the presence or absence of a vehicle ahead, a road shape, a road surface condition, or the like.

For example, not only the target scenic images but also the image of the vehicle ahead is obtained from the images shot with the camera 11 or the like. Then, the degree of monotony is calculated from the scenic images and the image of the vehicle ahead. In this case, it can be judged that it is a monotonous travel because the scene is hardly seen because of the same vehicle ahead, in other words, because the scene is hardly seen and the same vehicle ahead is only seen.

Alternatively, for example, not only the target scenic images but also the image of the road shape is obtained from the images shot with the camera 11 or the like. Then, the degree of monotony is calculated from the scenic images and the image of the road shape. In this case, even in the route in which the degree of monotony is calculated only from the scenic images and the degree or monotony is judged to be high, the monotony of degree can be judged to be low if there are many curves in the road shape, for example.

Alternatively, for example, not only the target scenic images but also the image of the road surface condition is obtained from the images shot with the camera 11 or the like. Then, the degree of monotony is calculated from the scenic images and the image of the road surface condition. In this case, even in the route in which the degree of monotony is calculated only from the scenic images and the degree or monotony is judged to be high, the monotony of degree can be judged to be low if there are many changes between a surfaced condition and a not-surfaced condition in the road surface condition, for example.

Moreover, in the aforementioned degree-of-monotony-in-scenery arithmetic apparatus 1, the degree of monotony may be calculated by judging the color information around the road, the presence or absence of a building, the road shape, the road surface condition and the like from the images vertically or obliquely shot from the above, such as an airplane and an artificial satellite.

Moreover, the degree of monotony may be calculated by using the information about the presence or absence of a building, the road shape, and the like, obtained from the existing map information.

<Another Embodiment 3>

In the aforementioned degree-of-monotony-in-scenery arithmetic apparatus 1, the degree of monotony may be calculated by using the scenic images stored in an external server in association with the position information and the time information.

In this case, firstly, GPS coordinates on the route whose degree of monotony is calculated are found from the map information. Then, a predetermined section, such as a section connecting two crossroads, a certain distance of section in a national road or prefectural road, and a section specified by a user, is divided by a certain distance. The scenic image at a point closest to the position coordinates of each divisional point is obtained from the external server. If a plurality of scenic images can be obtained, the scenic images are read in order from one edge of the section, and the degree of monotony is calculated in a positional change.

By obtaining the scenic images associated with the position information and the time information (i.e. the degree of monotony calculated from this) from the external server, it can be judged at which position the degree of monotony is high, before the travel of a vehicle. Thus, the route can be set to avoid a monotonous road (i.e. a route with the high degree of monotony) in the route setting before the travel. Moreover, since the scenic image is associated with the time information, the degree of monotony corresponding to the season in which the vehicle runs can be calculated before the travel. The degree of monotony likely varies according to seasons because of fall foliage and fallen leaves of trees. Thus, calculating the degree of monotony according to seasons before the drive is extremely useful in practice.

Moreover, the degree of monotony may be calculated by using the scenic images stored in the external server in association with information about a shooting direction on the route. In this case, the degree of monotony can be calculated in accordance with the scenic images in the travelling direction, which improves the accuracy of the degree of monotony.

Moreover, the degree-of-monotony-in-scenery arithmetic apparatus 1 may collect the scenic images shot by a plurality of movable bodies by using a so-called probe car principle, to calculate the degree of monotony.

Moreover, the degree-of-monotony-in-scenery arithmetic apparatus 1 can obtain change information about the degree of monotony on the route by calculating the degree of monotony in each section on the route, during the travel.

Moreover, the degree-of-monotony-in-scenery arithmetic apparatus 1 may be built in the external server, and the degree of monotony may be calculated on the server. In this case, information about a section specified by a user is transmitted to the server, and the scenic images are read from a memory area on the server to calculate the degree of monotony. Then, only the result of calculating the degree of monotony is returned to the user.

<Another Embodiment 4>

In the aforementioned degree-of-monotony-in-scenery arithmetic apparatus 1, the position information, which indicates the shooting position of the camera 11, and the time information, which indicates the shooting year, month, day, and time point of the camera 11, may be obtained. Then the scenic information may be mutually associated with the position information and the time information and then stored into the memory apparatus 16 or the external server. That is, the degree of monotony calculated from the scenic images may be stored in association with the position information and the time information. Incidentally, the position information and the time information can be obtained by using e.g. a GPS receiving apparatus.

Moreover, in addition to the position information and the time information, the scenic images may be stored into the memory apparatus or the external server in association with the information about the shooting direction of the scenic image.

Moreover, the degree-of-monotony-in-scenery arithmetic apparatus 1 may reflect the calculated degree of monotony in the map information, and may store the map information into the external server.

As a display form of the map information, the degree of monotony in a range of 0 to 100 is displayed as the color information in each section of a map. For example, a section in which the degree of monotony is greater than a certain threshold value (e.g. greater than 80) is displayed in a color (e.g. red) specified to be a monotonous road, and a section in which the degree of monotony is less than the threshold value is displayed in a normal color. Moreover, it is also possible to use gradation by a combination of three primary colors of R, G, and B. For example, by setting a section with the low degree of monotony to B, a section with the intermediate degree of monotony to G, and a section with the high degree of monotony to R, gradation of B-G and B-R is used for display.

Moreover, in addition to the color information, the monotonous route may be displayed in an understandable way or displayed to alert the driver, by using texts, marks, pictorial symbols, and the like.

Moreover, the route in which the section with the high degree of monotony continues may be displayed with a change provided. For example, the color information and the text information or the like may be displayed only in the route in which the section with the high degree of monotony continues over 5km. Moreover, since the calculated degree of monotony is associated with the time position, it can be used as history information in time series about the degree of monotony at the same position.

<Another Embodiment 5>

The degree of monotony calculated in the aforementioned degree-of-monotony-in-scenery arithmetic apparatus 1 may be reflected in the map information, and the map information may be recorded onto a recording medium, such as a disk, and printed materials.

This allows the degree of monotony to be reflected in the amp information displayed on an information display apparatus, such as a navigation apparatus, a computer, and a mobile phone, by using the recording medium.

Moreover, the degree of monotony can be reflected in the map information outputted to the printed materials, such as a commercial map booklet, a poster, and a direction signboard.

Moreover, the calculated degree of monotony can be reflected in a road sign, such as "Next, a monotonous road continues" or a road vindication drawn on a road, as information around the road.

\<Another Embodiment 6>

The aforementioned embodiments may be realized in a form that the apparatus is unified with hardware as an exclusive apparatus, or may be realized by making a computer read a program. If the program is read by the computer to realize the apparatus, the program is prepared to make the computer operation as the scenic image obtaining device, the scenic image classifying device, and the degree-of-monotony-arithmetic device.

The present invention is not limited to the aforementioned embodiments, and various changes may be made without departing from the invention as set out in the claims.

Industrial Applicability

The apparatus for and the method of calculating the degree of monotony in scenery according to the present invention can be applied to an apparatus for and a method of calculating the degree of monotony in scenery in the travel route of an automobile, and a computer program, a server, a memory medium, and a navigation apparatus which realize these functions. Moreover, they can be applied to an apparatus for calculating the degree of monotony in scenery or the like, which is mounted on or can be connected to various computer equipment for consumer use or business use, for example.

**Claims**

1. An driver assistance system (1) for calculating a degree of monotony in scenery and for giving feedback if the driving situation is judged as monotonous, comprising:

   a scenic image obtaining device (11, 12) for obtaining scenic images in order with respect to time, or obtaining the scenic images in order from one edge of a route;
   a scenic image classifying device (14) for classifying each of the scenic images obtained in order, in any one of a plurality of scene classes set in advance; and
   a degree-of-monotony arithmetic device (15) for calculating the degree of monotony in scenes corresponding to a predetermined number of scenic images obtained in tandem,
   on the basis of a temporal change or positional change in the classified scene class,
   **characterized by**
   said degree-of-monotony arithmetic device (15) counts the number of times of changing the classified scene class, with regard to a predetermined number of scenic images
   obtained in a predetermined period or obtained in tandem, counts the number of types of the classified scene classes,
   with regard to the predetermined number of scenic images, and
   calculates the degree of monotony, on the basis of the counted number of times and the counted number of types.

2. The driver assistance system (1) according to claim 1, wherein said scenic image obtaining device (11, 12) includes a shooting device (11) for shooting a scene corresponding to the scenic image.

3. The driver assistance system (1) according to claim 2, wherein said scenic image obtaining device (11, 12) comprises an obstacle recognizing device (13) for recognizing that the scene is blocked by an obstacle existing between the shooting device (11) and any of an object, an objective aggregate, and a landscape, which correspond to the scenic image of the scene.

4. The driver assistance system (1) according to claim 1, wherein said scenic image classifying device (14) includes:

   an image piece classifying device (145) for classifying each of a plurality of image pieces obtained by dividing each of the scenic images obtained in order, in any one of the plurality of scene classes; and
   a characteristic judging device (146) for judging a characteristic of a scene included in the scenic image, on the basis of an image piece classification result by the image piece classifying device (145), and
   said scenic image classifying device (14) classifies each of the scenic images obtained in order, in accordance with the judged characteristic.

5. The driver assistance system (1) according to claim 4, wherein the image piece classifying device (145) includes:

a color analyzing device (142) for analyzing a color property in each of the plurality of image pieces;

a fractal dimension analyzing device (143) for performing a fractal dimension analysis in each of the plurality of image pieces; and

an artifact amount recognizing device (144) for recognizing an amount of an artifact or artificial portion included in each of the plurality of image pieces by assessing the vertical edge components that continuously extended from the lower edge to the upper edge in each of the plurality of image pieces, and

the image piece classifying device (145) specifies a type of one portion of the scene included in each of the plurality of image pieces on the basis of a color analysis result by the color analyzing device (142), a fractal dimension analysis result by the fractal dimension analyzing device (143), and a recognition result of the amount of the artifact or artificial portion by the artifact amount recognizing device (144), and performs the classification on the basis of the specified type.

6. A method of operating a driver assistance system for calculating a degree of monotony in scenery, and for giving feedback if the driving situation is judged as monotonous, comprising:

a scenic image obtaining process (S1) of obtaining scenic images in order with respect to time, or obtaining the scenic images in order from one edge of a route;

a scenic image classifying process (S2) of classifying each of the scenic images obtained in order, in any one of a plurality of scene classes set in advance; and

a degree-of-monotony arithmetic process (S6) of calculating the degree of monotony in scenes corresponding to a predetermined number of scenic images obtained in tandem,

on the basis of a temporal change or positional change in the classified scene class,

**characterized by**

said degree-of-monotony arithmetic process (S6) counts the number of times of changing the classified scene class, with regard to a predetermined number of scenic images obtained in a predetermined period or obtained in tandem,

counts the number of types of the classified scene classes, with regard to the predetermined number of scenic images, and

calculates the degree of monotony, on the basis of the counted number of times and the counted number of types.

7. A computer program making a computer function as the driver assistance system (1) according to claim 1.

8. A navigation apparatus for performing route guidance on the basis of the degree of monotony calculated by the driver assistance system according to claim 1.

**Patentansprüche**

1. Ein Fahrerassistenzsystem (1) zum Berechnen eines Grades an Monotonie in der Landschaft und zum Geben einer Rückmeldung, wenn die Fahrsituation als monoton bewertet wird, aufweisend:

eine Landschaftsbild-Erhaltungsvorrichtung (11, 12) zum Erhalten von Landschaftsbildern in einer zeitlichen Anordnung oder zum Erhalten der Landschaftsbilder in einer Anordnung von einem Rand einer Fahrstrecke aus,

eine Landschaftsbild-Klassifizierungs-Vorrichtung (14) zum Klassifizieren von jedem der in Reihenfolge erhaltenen Landschaftsbilder in eine beliebige einer Mehrzahl von im Voraus eingestellten Szenenkategorien, und

eine Monotoniegrad-Rechenvorrichtung (15) zum Berechnen des Grades an Monotonie in Szenen entsprechend einer vorbestimmten Anzahl von hintereinander erhaltenen Szenenbildern auf der Grundlage einer zeitlichen Veränderung oder einer Positionsveränderung der klassifizierten Szenenkategorie,

**dadurch gekennzeichnet, dass**

die Monotoniegrad-Rechenvorrichtung (15) die Anzahl von Malen, bei denen sich die klassifizierte Szenenkategorie ändert, in Bezug auf eine vorbestimmte Anzahl von Landschaftsbildern zählt, die in einem vorbestimmten Zeitraum erhalten werden oder hintereinander erhalten werden, die Anzahl von Arten der klassifizierten Szenenkategorien in Bezug auf die vorbestimmte Anzahl von Landschaftsbildern zählt und

auf der Grundlage der gezählten Anzahl von Malen und der gezählten Anzahl von Arten den Grad an Monotonie berechnet.

2. Das Fahrerassistenzsystem (1) gemäß Anspruch 1, wobei die Landschaftsbild-Erhaltungsvorrichtung (11, 12) eine Aufnahmevorrichtung (11) zum Aufnehmen einer Szene aufweist, die dem Landschaftsbild entspricht.

**EP 1 933 277 B1**

3. Das Fahrerassistenzsystem (1) gemäß Anspruch 2, wobei die Landschaftsbild-Erhaltungsvorrichtung (11, 12) eine Hindernis-Erkennungs-Vorrichtung (13) aufweist, zum Erkennen, dass die Szene von einem Hindernis blockiert wird, das zwischen der Aufnahmevorrichtung (11) und irgendeinem von einem Gegenstand, einer Anhäufung von Gegenständen und einer Landschaft vorhanden ist, die dem Landschaftsbild der Szene entsprechen.

4. Das Fahrerassistenzsystem (1) gemäß Anspruch 1, wobei die Landschaftsbild-Klassifizierungs-Vorrichtung (14) aufweist:

eine Bildteil-Klassifizierungs-Vorrichtung (145) zum Klassifizieren von jedem einer Mehrzahl von Bildteilen, die durch Aufteilen jedes der in Reihenfolge erhaltenen Landschaftsbilder in irgendeine aus der Mehrzahl von Szenenkategorien erhalten werden, und
eine Charakteristik-Beurteilungs-Vorrichtung (146) zum Beurteilen einer Charakteristik einer in dem Landschaftsbild enthaltenen Szene auf der Grundlage eines Bildteil-Klassifizierungs-Ergebnisses durch die Bildteil-Klassifizierungs-Vorrichtung (145)
und
wobei die Landschaftsbild-Klassifizierungs-Vorrichtung (14) jedes der in Reihenfolge erhaltenen Landschaftsbilder gemäß der beurteilten Charakteristik klassifiziert.

5. Das Fahrerassistenzsystem (1) gemäß Anspruch 4, wobei die Bildteil-Klassifizierungs-Vorrichtung (145) aufweist:

eine Farbanalysevorrichtung (142) zum Analysieren einer Farbeigenschaft in jedem der Mehrzahl von Bildteilen,
eine Fraktal-Abmessungs-Analysevorrichtung (143) zum Durchführen einer Fraktal-Abmessungs-Analyse in jedem der Mehrzahl von Bildteilen, und
eine Artefakt-Mengen-Erkennungs-Vorrichtung (144) zum Erkennen einer Menge von Artefakten oder artifiziellen Abschnitten, die in jedem der Mehrzahl von Bildteilen enthalten sind, durch Beurteilen der vertikalen Randkomponenten, die sich in jedem der Mehrzahl von Bildteilen durchgehend von dem unteren Rand zu dem oberen Rand erstrecken, und
wobei die Bildteil-Klassifizierungs-Vorrichtung (145) eine Art eines Abschnitts der Szene, der in jedem der Mehrzahl von Bildteilen enthalten ist, auf der Grundlage eines Farbanalysenergebnisses durch die Farbanalysevorrichtung (142), eines Fraktal-Abmessungs-Analyse-Ergebnisses durch die Fraktal-Abmessungs-Analysevorrichtung (143), und eines Ergebnisses der Erkennung der Menge von Artefakten oder artifiziellen Abschnitten durch die Artefakt-Mengen-Erkennungs-Vorrichtung (144) spezifiziert und auf der Grundlage der spezifizierten Art die Klassifizierung durchführt.

6. Ein Verfahren zum Betätigen eines Fahrerassistenzsystems zum Berechnen eines Grades an Monotonie in einer Landschaft und zum Geben einer Rückmeldung, wenn die Fahrsituation als monoton bewertet wird, aufweisend:

ein Landschaftsbild-Erhaltungsverfahren (S1) zum Erhalten von Landschaftsbildern in einer zeitlichen Anordnung oder zum Erhalten der Landschaftsbilder in einer Anordnung von einem Rand einer Fahrstrecke aus,
ein Szenenbild-Klassifizierungsverfahren (S2) zum Klassifizieren von jedem der in Reihenfolge erhaltenen Landschaftsbilder in jeder beliebigen einer Mehrzahl von im Voraus eingestellten Szenenkategorien, und
ein Monotoniegrad-Rechenverfahren (S6) zum Berechnen des Grades an Monotonie in Szenen entsprechend einer vorbestimmten Anzahl von hintereinander erhaltenen Landschaftsbildern auf der Grundlage einer zeitlichen Veränderung oder einer Positionsveränderung in der klassifizierten Szenenkategorie,
**dadurch gekennzeichnet, dass**
das Monotoniegrad-Rechenverfahren (S6) die Anzahl von Malen, bei denen sich die klassifizierte Szenenkategorie in Bezug auf eine vorbestimmte Anzahl von in einem vorbestimmten Zeitraum erhaltenen oder hintereinander erhaltenen Landschaftsbildern ändert, zählt, die Anzahl von Arten der klassifizierten Szenenkategorien in Bezug auf die vorbestimmte Anzahl von Landschaftsbildern zählt, und
den Grad an Monotonie auf der Grundlage der gezählten Anzahl von Malen und der gezählten Anzahl von Arten berechnet.

7. Ein Computerprogramm, das einen Computer zum Funktionieren als das Fahrerassistenzsystem (1) gemäß Anspruch 1 bringt.

8. Ein Navigationsgerät zum Durchführen einer Fahrstreckenführung auf der Grundlage des Grades an Monotonie, der von dem Fahrerassistenzsystem gemäß Anspruch 1 berechnet wird.

29

**Revendications**

1. Système d'assistance au conducteur (1) pour calculer un degré de monotonie d'une scène et pour rétroagir si la situation de conduite est jugée monotone, comprenant :

   un dispositif (11, 12) d'obtention d'images scéniques pour obtenir des images scéniques dans l'ordre chronologique, ou obtenir les images scéniques dans l'ordre à partir d'un bord de la route ;
   un dispositif (14) de classification d'images scéniques pour classifier chacune des images scéniques obtenues dans l'ordre, dans l'une quelconque d'une pluralité de classes de scènes réglées à l'avance ; et
   un dispositif arithmétique (15) de calcul de degré de monotonie pour calculer le degré de monotonie de scènes correspondant à un nombre prédéterminé d'images scéniques obtenues en tandem, sur la base d'un changement de temps ou d'un changement de position dans la classe de scène classifiée,
   **caractérisé en ce que** :
   ledit dispositif arithmétique (15) de calcul de degré de monotonie
   compte le nombre de fois où la classe de scène classifiée change par rapport à un nombre prédéterminé d'images scéniques obtenues dans une période prédéterminée ou obtenues en tandem ;
   compte le nombre de types de classes de scènes classifiées, par rapport au nombre prédéterminé d'images scéniques ; et
   calcule le degré de monotonie sur la base du nombre de fois compté et du nombre de types compté.

2. Système d'assistance au conducteur (1) selon la revendication 1, dans lequel ledit dispositif (11, 12) d'obtention d'images scéniques comprend un dispositif de prise de vues (11) pour prendre des vues d'une scène correspondant à l'image scénique.

3. Système d'assistance au conducteur (1) selon la revendication 2, dans lequel ledit dispositif (11, 12) d'obtention d'images scéniques comprend un dispositif (13) de reconnaissance d'obstacles pour reconnaître que la scène est bloquée par un obstacle existant entre le dispositif de prise de vues (11) et l'un quelconque des éléments suivants : un objet, un agrégat objectif et un paysage, qui correspondent à l'image scénique de la scène.

4. Système d'assistance au conducteur (1) selon la revendication 1, dans lequel ledit dispositif de classification d'images scénique (14) comprend :

   un dispositif (145) de classification de parties d'images pour classifier chacune d'une pluralité de parties d'images obtenues en divisant chacune des images scéniques obtenues dans l'ordre, dans l'une quelconque de la pluralité des classes de scènes ; et
   un dispositif (146) de jugement de caractéristique pour juger une caractéristique d'une scène comprise dans l'image scénique sur la base d'un résultat de classification de parties d'images par le dispositif (145) de classification de parties d'images, et
   ledit dispositif (14) de classification d'images scénique classifiant chacune des images scéniques obtenues dans l'ordre selon la caractéristique jugée.

5. Système d'assistance au conducteur (1) selon la revendication 4, dans lequel le dispositif (145) de classification de parties d'images comprend :

   un dispositif (142) d'analyse de couleur pour analyser une propriété de couleur dans chacune de la pluralité de parties d'images ;
   un dispositif (143) d'analyse de dimension fractale pour effectuer une analyse de dimension fractale dans chacun de la pluralité de parties d'images ; et
   un dispositif (144) de reconnaissance de quantité d'artéfact pour reconnaître une quantité d'un artéfact ou d'une portion artificielle comprise dans chacune de la pluralité de parties d'images en évaluant les composants de bords verticaux qui s'étendent en continu du bord inférieur au bord supérieur dans chacune de la pluralité de parties d'images ; et
   le dispositif (145) de classification de parties d'images spécifient un type d'une portion de la scène comprise dans chacune de la pluralité de parties d'images sur la base d'un résultat d'analyse de couleur par le dispositif (142) d'analyse de couleur, d'un résultat d'analyse de dimension fractale par le
   dispositif (143) d'analyse de dimension fractale et d'un résultat de reconnaissance de la quantité de l'artéfact ou de la portion artificielle par le dispositif (144) de reconnaissance de quantité d'artéfact et effectuant la classification sur la base du type spécifié.

**6.** Procédé d'exploitation d'un système d'assistance au conducteur pour calculer un degré de monotonie dans une scène et pour rétroagir si la situation de conduite est jugée comme monotone, comprenant :

un procédé (S1) d'obtention d'images scéniques pour obtenir des images scéniques dans un ordre chronologique ou obtenir les images scéniques dans l'ordre à partir d'un bord d'une route ;

un procédé (S2) de classification d'images scéniques pour classifier chacune des images scéniques obtenues dans l'ordre, dans l'une quelconque d'une pluralité de classes de scènes réglées à l'avance ; et

un procédé arithmétique (S6) de calcul de degré de monotonie pour calculer le degré de monotonie dans des scènes correspondant à un nombre prédéterminé d'images scéniques obtenues en tandem, sur la base d'un changement de temps ou d'un changement de position dans la classe de scènes classifiées,

**caractérisé en ce que** ledit procédé arithmétique (S6) de degré de monotonie :

compte le nombre de fois où la classe de scènes classifiées change par rapport à un nombre prédéterminé d'images scéniques obtenues dans une période prédéterminée ou obtenues en tandem,

compte le nombre de types de classes de scènes classifiées, par rapport au nombre prédéterminé d'images scéniques, et

calcule le degré de monotonie sur la base du nombre de fois compté et du nombre de types compté.

**7.** Programme informatique assurant une fonction informatique telle que le système d'assistance au conducteur (1) selon la revendication 1.

**8.** Appareil de navigation pour effectuer un guidage de route sur la base du degré de monotonie calculé par le système d'assistance au conducteur selon la revendication 1.

[FIG. 1]

[FIG. 2]

```
                    ┌──────────────┐
                    │    Start     │
                    └──────┬───────┘
                           │
                    ┌──────▼───────┐
                    │ Scenic image │  S1
                    │  obtaining   │
                    └──────┬───────┘
                           │
                    ┌──────▼───────┐
                    │ Scenic image │  S2
                    │classification│
                    └──────┬───────┘
                           │
                           │        S3
                      ◇──────────◇
                     / Predetermined \      NO
                    <  number of scenic >──────────┐
                     \ images obtained?/           │
                      ◇──────────◇                 │
                           │ YES                    │
                    ┌──────▼───────┐                │
                    │ Preprocessing│  S4            │
                    └──────┬───────┘                │
                           │                        │
                    ┌──────▼───────┐                │
                    │Count the number of│  S5       │
                    │ changes and the │              │
                    │ number of types │              │
                    └──────┬───────┘                │
                           │                        │
                    ┌──────▼───────┐                │
                    │Calculate degree of│  S6       │
                    │   monotony    │               │
                    └──────┬───────┘                │
                           │       S7               │
                      ◇──────────◇      NO          │
                     < Monotonous? >──────┐         │
                      ◇──────────◇        │         │
                           │ YES   S8     │         │
                    ┌──────▼───────┐      │         │
                    │    Action    │      │         │
                    └──────┬───────┘      │         │
                           │◄─────────────┘         │
                           │       S9               │
                      ◇──────────◇        YES       │
                     <  Continue?  >────────────────┘
                      ◇──────────◇
                           │ NO
                    ┌──────▼───────┐
                    │     End      │
                    └──────────────┘
```

[FIG. 3]

```
        ┌──────────────────────────┐
        │   Start the scenic image  │
        │    obtaining process      │
        └──────────────────────────┘
                     │
                     ▼                    ⌐S11
        ┌──────────────────────────┐
        │    Shoot a scene or       │
        │       the like            │
        └──────────────────────────┘
                     │                     S12
                     ▼
        ┌──────────────────────────┐
        │      Store the image      │
        └──────────────────────────┘
                     │
                     ▼              S13
              ╱───────────╲   YES
             ╱ Blocked by an ╲──────┐
             ╲   obstacle?   ╱       │
              ╲───────────╱          │
                   │ NO              │
                   ▼                 │
        ┌──────────────────────────┐ │
        │         Return            │ │
        └──────────────────────────┘
```

[FIG. 4]

[FIG. 5]

[FIG. 6]

[FIG. 7]

```
     Start the color
    analysis process
            │
            ▼          S31
  ┌─────────────────────┐
  │ Change RGB-system   │
  │ color information to │
  │ HLS-system          │
  │ color information   │
  └─────────────────────┘
            │
            ▼          S32
  ┌─────────────────────┐
  │  Select one pixel of│
  │   the image piece   │
  └─────────────────────┘
            │
            ▼      S33
      ╱Sign reference╲  YES          S34
     ╲  satisfied?  ╱ ──────►┌──────────────┐
            │NO              │Increase a sign│
            ▼      S35       │    count     │
      ╱  Green  ╲  YES       └──────────────┘
     ╱ reference ╲──────►       S36
     ╲satisfied?╱        ┌──────────────┐
            │NO          │Increase a green│
            ▼      S37    │    count     │
      ╱Blue-sky╲  YES     └──────────────┘
     ╱reference ╲────►  S38
     ╲satisfied?╱    ┌──────────────┐
            │NO      │Increase a blue-sky│
            │        │    count     │
            ▼        └──────────────┘
      ╱Judgment╲  NO
     ╱ended for all╲────
     ╲  pixels? ╱
            │YES        S40
            ▼
  ┌─────────────────────┐
  │  Calculate a sign   │
  │ ratio, a green ratio,│
  │ and a blue-sky ratio │
  └─────────────────────┘
            │
            ▼
        Return
```

S39

38

[FIG. 8]

```
        ┌─────────────────────────┐
        │ Start the artifact amount│
        │   recognition process    │
        └─────────────────────────┘
                     │
                     ▼
        ┌─────────────────────────┐  ─ S41
        │     Extract edge         │
        │  components which        │
        │    extend in a           │
        │ longitudinal direction   │
        └─────────────────────────┘
                     │
                     ▼
        ┌─────────────────────────┐  ─ S42
        │                          │
        │    Binalize the edge     │
        │      components          │
        │                          │
        └─────────────────────────┘
                     │
                     ▼
        ┌─────────────────────────┐  ─ S43
        │   Count the edge         │
        │  components with a       │
        │    predetermined         │
        │ length or more which     │
        │    continuously          │
        │       extend             │
        └─────────────────────────┘
                     │
                     ▼
        ┌─────────────────────────┐
        │        Return            │
        └─────────────────────────┘
```

[FIG. 9]

[FIG. 10]

55

| | Color property | | | Fractal dimension analysis value | Artifact amount count value |
|---|---|---|---|---|---|
| | Green ratio | Blue-sky ratio | Sign ratio | | |
| Plant | High | Low | Low | High | 0 |
| Sky | Low | High | Low | Low | 0 |
| Artifact | Low | Low | High | | |
| | | | | | 1 or more |

[FIG. 11]

56

Plant

Artifact

Sky

Others

[FIG. 12]

[FIG. 13]

[FIG. 14]

|  | Course A | Course B | Course C | Course D |
|---|---|---|---|---|
| The number of chnages | 0 | 2 | 5 | 9 |
| The number of types | 1 | 2 | 3 | 4 |
| Degree or monotony | 100 | 90 | 62. 5 | 10 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002254955 A

**Non-patent literature cited in the description**

- **Fletcher L. et al.** Road Scene Monotony Detection in a Fatigue Management Driver Assistance System. *IEEE Proc. Intelligent Vehicles Symposium,* 2005, 484-489

- Modeling the Shape of the Scene: A Holistic Representation of the Spatial Envelope. **Oliva A. et al.** Int. J. Computer Vision. Kluwer Academic Publ. NL, 2001, vol. 42, 145-175